# EUROPÄISCHE PATENTSCHRIFT

(11) **EP 4 474 101 B1**
(45) Veröffentlichungstag und Bekanntmachung des Hinweises auf die Patenterteilung: **14.05.2025**
(21) Anmeldenummer: 23177204.7
(22) Anmeldetag: 05.06.2023
(51) Int. Cl.: B23Q 1/28, B23Q 16/10, B25B 5/06, F16D 49/06, F16D 55/12

(54) **VAKUUMTAUGLICHE KLEMM- UND/ODER BREMSVORRICHTUNG**
VACUUM-COMPATIBLE CLAMPING AND/OR BRAKING DEVICE
DISPOSITIF DE SERRAGE ET/OU DE FREINAGE APTE AU VIDE

(43) Veröffentlichungstag der Anmeldung: 11.12.2024
(73) Patentinhaber: HEMA Maschinen- und Apparateschutz GmbH, 63500 Seligenstadt (DE)
(72) Erfinder: Likus, Edmund, 63500 Seligenstadt (DE)
(74) Vertreter: Herrmann, Daniel

(56) Entgegenhaltungen:
- EP-B1- 1 585 616
- EP-B1- 1 651 881
- DE-B3- 102021 006 219
- US-A1- 2008 217 872

## Beschreibung

### TECHNISCHES GEBIET

Die Erfindung betrifft ein ringförmiges elastisches Element sowie eine Gehäuseteil für eine pneumatische Klemm- und/oder Bremsvorrichtung und eine pneumatische Klemm- und/oder Bremsvorrichtung mit solch einem ringförmigen elastischen Element.

### HINTERGRUND DER ERFINDUNG

Bei der Herstellung von Werkzeug- oder Maschinenteilen werden Bearbeitungsmaschinen, insbesondere Arbeitsspindeln oder andere Werkzeugmaschinen, verwendet, die mittels an einer Welle befestigten Werkzeugen Material von einem Werkstück bearbeiten, insbesondere um es in die gewünschte Form zu bringen. Die Welle kann eine Rotationsachse oder Schwenkachse von einer solchen Maschine sein. Weiterhin werden mittels einer Welle rotier- oder schwenkbare Tische dazu verwendet, Werkzeuge oder Werkstücke in die geeignete Bearbeitungsposition zu stellen oder Werkstücke mit entsprechenden Drehzahlen zu bewegen. Voraussetzung für ein genaues und effizientes Bearbeiten ist dabei unter Anderem eine hohe Drehzahl der Welle. Notfall- bzw. Sicherheitssysteme haben daher die Aufgabe, die Welle bei Störung oder Ausfall der Systeme, wie beispielsweise Stromausfall oder Kabelbruch, zu stoppen bzw. in einer festen Position zu halten und damit zu fixieren.

Gängige Bearbeitungsmaschinen verfügen dabei über elektromagnetische, hydraulische oder pneumatische Klemm- und/oder Bremsvorrichtungen. Solche Vorrichtungen verfügen über einen Reibbelag, der mittels Kraftübertragung reibschlüssig mit der Welle verbunden werden kann. Dadurch wird ein unterschiedlich schnelles Fixieren der Welle ermöglicht.

Bei hydraulischen Klemmvorrichtungen wird eine Kammer mit Hydrauliköl beaufschlagt und klemmt die sich drehende Welle oder Scheibe fest. Auch passive Hydraulik-Klemmen sind bekannt. Solche hydraulischen Klemmen weisen jedoch lange Reaktionszeiten auf bzw. kurze Reaktionszeiten erfordern dort einen sehr hohen Aufwand. Ferner ist das Hydraulikmaterial, insbesondere Hydraulikventile und Hydraulikrohre, kostspielig und erfordert längere Montagezeiten. Auch ist durch das Hydrauliköl ein Mehraufwand für die Aufrechterhaltung der Sauberkeit im Umfeld einer hydraulischen Klemme zu verzeichnen.

Bei pneumatischen Klemm- und/oder Bremsvorrichtungen werden üblicherweise elastische Elemente, insbesondere federnde Platten, mit Druckluft beaufschlagt und können einige der genannten Nachteile von hydraulischen Klemmvorrichtungen überwinden.

EP 1585 616 B1 und EP 1 651 881 B1 beschreiben pneumatische Klemmvorrichtungen mit zwei ringförmigen Federplatten, die in ein Gehäuse der Klemmvorrichtungen eingebracht werden und dort einen Druckraum bilden, der mit Druckluft beaufschlagt oder be- und entlüftet werden kann, um die Biegung der Federplatten zu ändern und dadurch zwischen einem geschlossenen Zustand der Klemmvorrichtungen, in dem ein zu klemmendes Objekt wie eine rotierbare Welle geklemmt wird, und einem offenen Zustand der Klemmvorrichtungen, in dem das Objekt frei ist, zu wechseln. In der Praxis hat sich jedoch gezeigt, dass solche Klemmen im Vakuum und im Reinraum nicht störungsfrei für Klemme und Umgebung betrieben werden können.

### KURZBESCHREIBUNG DER ERFINDUNG

Ausgehend von dem eingangs genannten Stand der Technik liegt der Erfindung die Aufgabe zugrunde, Mittel bereitzustellen, die eine pneumatische Klemm- und/oder Bremsvorrichtung dazu befähigen, im Vakuum oder im Reinraum verlässlich betrieben zu werden.

Die Erfindung löst diese Aufgabe mit einem ringförmigen elastischen Element mit den Merkmalen des Patentanspruchs 1, mit einem Gehäuseteil mit den Merkmalen des Patentanspruchs 14 und mit einer Klemm- und/oder Bremsvorrichtung mit den Merkmalen des Patentanspruchs 17. Bevorzugte Ausführungsformen sind in den abhängigen Ansprüchen, in der Beschreibung und in den Figuren beschrieben.

Entsprechend der erfindungsgemäßen Lösung wird ein ringförmiges elastisches Element für eine Klemm- und/oder Bremsvorrichtung bereitgestellt, das Element umfassend: eine ringförmige Federplatte, wobei die ringförmige Federplatte eine erste ringförmige Seitenfläche und eine zweite ringförmige Seitenfläche aufweist; ein Dichtungselement (hier auch als "zweites Dichtungselement" bezeichnet, da es auf der zweiten Seitenfläche der Federplatte angeordnet ist), wobei das Dichtungselement auf der zweiten Seitenfläche der Federplatte angeordnet ist, und wobei das Dichtungselement in einem Bereich eines inneren Randes der ringförmigen Federplatte einen inneren Vorsprung ausbildet und in einem Bereich eines äußeren Randes der ringförmigen Federplatte einen äußeren Vorsprung ausbildet, der innere und/oder äußere Vorsprung des Dichtungselements jeweils zumindest abschnittsweise eine Ausbeulung ausbildet.

Entsprechend der erfindungsgemäßen Lösung wird ferner ein Gehäuseteil für eine Klemm- und/oder Bremsvorrichtung bereitgestellt, das Gehäuseteil umfassend:
eine ringförmige Aussparung zum Einklemmen des erfindungsgemäßen elastischen Elements aufweist, wobei die Aussparung einen ersten ringförmigen Rand und einen zweiten ringförmigen Rand einer ringförmigen Öffnung des Gehäuseteils ausbildet, wobei die ringförmige Aussparung eine Innenfläche des Gehäuseteils zwischen dem ersten ringförmigen Rand und dem zweiten ringförmigen Rand definiert, wobei die Innenfläche im Bereich des ersten ringförmigen Rands eine erste Schräge ausbildet und die Innenfläche im Bereich des zweiten ringförmigen Rands eine zweite Schräge ausbildet, wobei die Schrägen derart ausgerichtet sind, dass sich die ringförmige Öffnung zu den ersten und zweiten Rändern hin vergrößert. Die Ausbeulung und die Schrägen bewirken, dass das erfindungsgemäße elastische Element und das erfindungsgemäße Gehäuseteil miteinander in Beziehung stehende Erzeugnisse bilden, da jede Ausbeulung mit einer der Schrägen in Kontakt treten kann.

Entsprechend der erfindungsgemäßen Lösung wird ferner eine Klemm- und/oder Bremsvorrichtung zum Klemmen und/oder Bremsen eines zu klemmenden und/oder bremsenden Objekts bereitgestellt, die Vorrichtung umfassend: ein erstes erfindungsgemäßes elastisches Element und ein zweites erfindungsgemäßes elastisches; ein Gehäuse umfassend ein erstes, vorzugsweise erfindungsgemäßes, Gehäuseteil mit einer Innenfläche und ein zweites, vorzugsweise erfindungsgemäßes, Gehäuseteil mit einer Innenfläche, wobei die Gehäuseteile derart zueinander angeordnet und miteinander befestigt sind, dass die Innenflächen der Gehäuseteile zusammen einen Innenraum innerhalb des Gehäuses abgrenzen; ein oder mehrere Klemmelemente, wobei jedes Klemmelement eine Klemmfläche aufweist; eine in dem Innenraum angeordnete Feder umfassend das erste elastische Element und das zweite elastische Element, wobei die elastischen Elemente derart innerhalb des Innenraums angeordnet sind, dass in dem Innenraum ein erster Druckraum zwischen den elastischen Elementen und den Innenflächen der Gehäuseteile gebildet wird, wobei der erste Druckraum entlüftbar ist und mit Überdruck eines dem Gehäuse zuführbaren Druckmediums beaufschlagbar ist, wobei das erste elastische Element mit dessen erster Seitenfläche zugewandt zu der Innenfläche des ersten Gehäuseteils in dem Innenraum eingeklemmt ist, und wobei das zweite elastische Element mit dessen erster Seitenfläche zugewandt zu der Innenfläche des zweiten Gehäuseteils in dem Innenraum eingeklemmt ist; wobei die Feder ausgelegt ist, dass bei Be- oder Entlüften des ersten Druckraums oder Beaufschlagung des ersten Druckraums mit Überdruck, eine Biegung mindestens einer der Federplatten der elastischen Elemente veränderbar ist und dadurch die Vorrichtung zwischen einem geöffneten Zustand, in dem ein zu klemmendes Objekt von den ein oder mehreren Klemmflächen beabstandet ist, und einem geschlossenen Zustand, in dem mindestens eine der ein oder mehreren Klemmflächen eine Klemm- und/oder Bremskraft auf das Objekt übertragen, wechselt, wobei die Ausbeulung des inneren oder äußeren Vorsprungs zumindest eines der elastischen Elemente ausgelegt ist, einen Kontakt mit einem ersten Abschnitt der Innenfläche eines der Gehäuseteile herzustellen, um dadurch eine Strömungsverbindung zwischen dem ersten Druckraum und dem Übergang zwischen den Gehäuseteilen zumindest zu hemmen..

Das lange Zeit nicht überwundene Problem des störanfälligen Betriebs der Klemm- und/oder Bremsvorrichtungen im Vakuum bzw. im Reinraum (Klemme fällt aus und/oder Umgebungsatmosphäre wird durch die Klemme belastet) konnte durch diese Erfindung überwunden werden. Die folgenden Entwicklungen der Erfinder haben jeweils einzeln und verstärkt in Kombination Beiträge dazu geleistet.

Beispielsweise kann der innere und/oder äußere Vorsprung des (zweiten) Dichtungselements jeweils zumindest abschnittsweise eine sich vorzugsweise radial erstreckende Ausbeulung (oder Ausbuchtung oder nach außen gerichtete Wölbung) ausbilden, um eine besonders gute Dichtheit am Übergang der Gehäuseteile zur Anwendung im Vakuum bzw. in einem Reinraum zu erzielen. Die Ausbeulung kann durch das Aufbringen von gegenüber dem Rest des Vorsprungs zusätzlichem (elastischen) Material des Dichtungselements hergerichtet werden. Diese Ausbeulungen können einen Innenraum innerhalb eines Gehäuseteils beispielsweise im Bereich eines Spalts am Übergang der Gehäuseteile ausfüllen und gegen eine Innenwand (z.B. eine Schräge oder lange Fase) des Gehäuseteils in abdichten Kontakt gebracht werden. Vorzugsweise erstreckt sich die Ausbeulung des äußeren Vorsprungs des zweiten Dichtungselements radial nach außen, vorzugsweise radial nach außen über den äußeren Rand der Federplatte hinweg. Vorzugsweise erstreckt sich die Ausbeulung des inneren Vorsprungs des zweiten Dichtungselements radial nach innen, vorzugsweise radial nach innen über den inneren Rand der Federplatte hinweg.

Für die Dichtheit des ersten Druckraums gegen einen Spalt an dem Übergang angrenzender Gehäuseteile sind die Ausbeulungen besonders vorteilhaft. Die Ausbeulungen bewirken, dass beim Betrieb des ersten Druckraums kaum oder kein Medium über den Gehäuserand ein- bzw. abströmt.

Alternativ oder zusätzlich zu den Ausbeulungen, weist der innere Vorsprung und/oder äußere Vorsprung des zweiten Dichtungselements bevorzugt jeweils eine zumindest abschnittsweise plane Oberfläche auf, die als besonders abdichtende Auflagefläche beispielsweise gegenüber einer Gehäusewand oder einem anderen elastischen Element dienen kann. Dadurch wird die Klemme bzw. deren zweiter Druckraum verstärkt abgedichtet, um einen Austritt des Druckmediums aus dem zweiten Druckraum in die Umgebung zu hemmen bzw. zu verhindern. Die planen Oberflächen erhöhen den Widerstand gegen die Durchlässigkeit eines Druckmediums (insb. Gase) beim Beaufschlagen des zweiten Druckraums mit dem Druckmedium. Die planen Oberflächen verringern oder verhindern das Überströmen eines Mediums zwischen dem ersten Druckraum und dem zweiten Druckraum. Vorzugsweise ist die Ausbeulung jeweils zur planen Oberfläche benachbart oder angrenzend. Vorzugsweise geht die plane Oberfläche jeweils in die Ausbeulung über.

Die planen Oberflächen unterstützen zudem das Verdrängen der Ausbeulungen gegen die Innenwand der Gehäuseteile und damit die oben beschriebenen Wirkungen der Ausbeulungen. Diese Unterstützung ist besonders stark ausgeprägt, wenn, wie beschrieben, die plane Oberfläche and die dazugehörige Ausbeulung benachbart oder angrenzend ist und/oder in diese übergeht. Die planen Oberflächen und die jeweils dazugehörigen Ausbeulungen bilden somit eine Kombination von Merkmalen, die synergistisch zusammenwirken, jedoch einzeln vorliegen können.

Hinsichtlich des Einsatzes im Vakuum oder Reinraum kann das für das elastische Element verwendet elastische Material ein geeignetes Material sein, das vorzugsweise kaum oder keine Abgabe von Material ins Vakuum aufweist (hohe Medienbeständigkeit), für hohe Temperaturen geeignet ist und/oder eine niedrige Gasdurchlässigkeit aufweist.

Um einen weiteren Beitrag zu einer besonders guten Dichtheit zur Anwendung in Vakuumumgebung bzw. in einem Reinraum zu leisten, kann das erfindungsgemäße elastische Element eine erste Anschlussdichtung für einen ersten Anschluss für die Beaufschlagung des ersten Druckraumes mit einem Druckmedium aufweisen, wobei die erste Anschlussdichtung den ersten Anschluss abdichtet. Bevorzugt kann ein Rand der ersten Anschlussdichtung eine erste Anschlussöffnung zumindest teilweise und vorzugsweise vollständig umlaufen und kann in Form eines O-Ring vorliegen.

Um einen weiteren Beitrag zu einer besonders guten Dichtheit zur Anwendung in Vakuumumgebung bzw. in einem Reinraum zu leisten, kann das erfindungsgemäße elastische Element eine zweite Anschlussdichtung für einen zweiten Anschluss für die Beaufschlagung des zweiten Druckraumes mit einem Druckmedium aufweisen, wobei die zweite Anschlussdichtung den zweiten Anschluss abdichtet. Bevorzugt kann ein Rand der zweiten Anschlussdichtung eine zweite Anschlussöffnung zumindest teilweise und vorzugsweise vollständig umlaufen und kann in Form eines O-Ring vorliegen. Besonders bevorzugt kann der Rand einen Anschlussvorsprung der zweiten Anschlussdichtung ausbilden, der zumindest abschnittsweise an dem Rand der zweiten Anschlussöffnung einen Hintergriff ausbildet. Das Gehäuseteil kann von dem Hintergriff des Anschlussvorsprungs des elastischen Elements hintergriffen werden. Der Hintergriff der zweiten Anschlussdichtung verstärkt die Abdichtung nach außen und vermindert das Risiko eines Abhebens der zweiten Anschlussdichtung von der Gehäuseplanfläche, speziell beim Beaufschlagen des ersten Druckraums. Dazu kommt, dass durch den Hintergriff der Einsatz von Dichtmasse (Kleber) an dieser Stelle vermieden werden kann. Eine solche Dichtmasse könnte sich negativ auf Vakuum bzw. Reinraum auswirken.

Um einen weiteren Beitrag zu einer besonders guten Dichtheit zur Anwendung in Vakuumumgebung bzw. in einem Reinraum zu leisten, kann das Gehäuseteil eines erfindungsgemäßen Gehäuseteils oder eine erfindungsgemäßen Vorrichtung eine, vorzugsweise kreisförmige, Rille oder Nut zur Aufnahme von einem O-Ring aufweisen. Die Rille bzw. Nut mit O-Ring unterstützt die vorherbeschriebene Funktion der Ausbeulung und der ersten Anschlussdichtung dahingehend, dass bei dem Betrieb des ersten Druckraumes keine Fluide über den Gehäuserand ein- oder abströmen. Zusätzlich kann die für die Anwendung im Vakuum und im Reinraum unerwünschte Dichtungsmasse (Kleber) zwischen den Gehäusehälften entfallen.

Um den zusätzlich zur Anwendung im Vakuum oder im Reinraum auch die Anwendung der Klemme in feuchter Umgebung zu ermöglichen, haben die Erfinder eine Reihe von Mitteln entwickelt, die im Folgenden beschreiben werden und jeweils einzeln und in Kombination auch mit den oben beschriebenen Mitteln kombiniert werden können.

Beim Betrieb der Vorrichtung unter Einfluss von flüssigen Medien, insbesondere im Bereich der Klemmfläche, besteht die Möglichkeit des Eindringens des flüssigen Mediums in das Gehäuse der Vorrichtung. Als Folge dieser Möglichkeit zeigt sich im Betrieb das Eindringen des Mediums in den ersten Druckraum, was zum Stau in dem ersten Druckraum führt. Das Eindringen des flüssigen Mediums führt zum Ausfall der Bauteile aufgrund von Undichtigkeiten (z.B. Gummierungsschäden), Verschmutzung in der Vorrichtung und Verschlechterung der Reaktionszeiten der Vorrichtung. Die Erfinder haben erkannt, dass das Eindringen des flüssigen Mediums maßgeblich auf kleine Spalte zurückzuführen ist, die am Übergang der Gehäuseteile, insbesondere der beiden Klemmelemente bzw. Klemmflächen der Gehäuseteile, der Vorrichtung vorliegen. Beim Vorgang des Öffnens wird beispielsweise ein zweiter Druckraum aufgeweitet, indem z.B. der zweite Druckraum mit Druckluft beaufschlagt wird. Gleichzeitig entlüftet der erste Druckraum. Die Bewegung des elastischen Elements (z.B. gummierte Federplatte) verdrängt die Luft aus dem ersten Druckraum und führt so zu einer Saugwirkung durch den ersten Druckraum. Als Folge des Eindringens des flüssigen Mediums in den ersten Druckraum entsteht dann in der Regel eine permanente kleine Undichtigkeit u.a. zum zweiten Druckraum, was zu einer konstanten Strömung des flüssigen Mediums führt, solange der zweite Druckraum aufgeweitet wird. Durch diesen Effekt wird die Saugwirkung noch verstärkt und führt zum beschleunigten Ausfall oder zur frühzeitigen Störung in der Vorrichtung.

Vor diesem Hintergrund haben die Erfinder erkannt, dass ein Anbringen eines Dichtungselements mit einem Vorsprung auf der dem ersten Druckraum zugewandten Seite des elastischen Elements diese Saugwirkung unterbricht oder soweit hemmt, dass diese oben beschriebenen Ausfälle oder Störungen für die Vorrichtung nicht mehr auftreten können. Insbesondere kann durch diese Mittel die strömungstechnische Verbindung der ersten Druckkammer mit dem Übergang der Gehäuseteile bzw. Klemmelemente gehemmt werden, ohne, dass dadurch die Öffnungs- und Schließfunktion der Vorrichtung bzw. deren Dynamik beeinträchtigt wird. In dem erfindungsgemäßen elastischen Element ist ein zweites Dichtungselement auf der zweiten Seitenfläche der ringförmigen Federplatte angeordnet und das zweite Dichtungselement weist in einem Bereich eines inneren Randes der ringförmigen Federplatte des elastischen Elements einen inneren Vorsprung und im Bereich eines äußeren Randes der ringförmigen Federplatte einen äußeren Vorsprung auf. Diese zwei Vorsprünge am inneren und äußeren Rand der Federplatte dienen üblicherweise zum Auflegen auf ein gegenüberliegendes zweites elastisches Element oder eine Innenwand eines Gehäuses, um dort den zweiten Druckraum zu bilden. Jeder dieser zwei Vorsprünge kann bevorzugt deshalb eine Auflagefläche aufweisen. Entsprechend der obigen Erkenntnisse der Erfinder weist das erfindungsgemäße elastische Element auf der anderen (ersten) Seitenfläche der Federplatte, die demzufolge dem ersten Druckraum zugewandt sein kann, ein (erstes) Dichtungselement auf, welches einen ersten Vorsprung ausbildet, der folglich geeignet ist, in den ersten Druckraum hineinzuragen und dort die strömungstechnische Verbindung des ersten Druckraums mit dem Übergang der Gehäuseteile zumindest zu hemmen.

Der erste Vorsprung ist vorzugsweise zwischen dem inneren und äußerem Rand der ringförmigen Federplatte ausgebildet, wobei besonders bevorzugt der erste Vorsprung in einem Bereich des inneren oder äußeren Randes der ringförmigen Federplatte ausgebildet ist, um, je nachdem ob die Klemmwirkung nach innen oder nach außen gerichtet ist, nahe an den oben beschriebenen Spalten zwischen den Klemmelementen zu sein. Der erste Vorsprung ist vorzugsweise derart auf der ersten Seitenfläche der ringförmigen Federplatte angebracht, dass er geeignet ist, im Bereich des Übergangs der Gehäuseteile oder der Klemmelemente angebracht zu sein und in den ersten Druckraum reinzuragen.

Gemäß eines bevorzugten Aspekts des elastischen Elements, weist das erste Dichtungselement ferner - vorzugsweise auf der ersten Seitenfläche vorzugsweise in einem Bereich des Randes der ringförmigen Federplatte, der dem Rand gegenüberliegend ist, an dem der erste Vorsprung angeordnet ist - einen zweiten Vorsprung auf, der als weitere Unterbrechung oder Hemmung der strömungstechnischen Verbindung des ersten Druckraums mit den Übergängen der Gehäuseteile bzw. Klemmelemente dient.

Gemäß eines bevorzugten Aspekts des elastischen Elements sind das erste und/oder das zweite Dichtungselement auf der Federplatte vulkanisiert, und so dort besonders gut fixiert zu sein.

Vorzugsweise weisen der erste und/oder der zweite Vorsprung jeweils eine zumindest abschnittsweise abgerundete Oberfläche auf, um in einer beliebig geformten Innenwanderung des Gehäuses einen Kontakt herzustellen, der die oben dargestellte Hemmung oder Unterbrechung der strömungstechnischen Verbindung bewirken kann.

Gemäß eines bevorzugten Aspekts des Gehäuseteils oder der Vorrichtung weist das Gehäuseteil eine Einbuchtung oder Senke in der Innenfläche des Gehäuseteils auf, wobei die Einbuchtung oder Senke vorzugsweise in ihrer Form komplementär zur Oberfläche des sie kontaktierenden ersten bzw. zweiten Vorsprungs ist, damit der oben beschriebene Kontakt besonders wirkungsvoll (abdichtend) ist.

Die Erfinder haben erkannt, dass sowohl der erste Vorsprung als auch der zweite, optionale Vorsprung des ersten Dichtungselements jeweils auch geeignet ist ein Austritt von Druckmedium (insbesondere Gase), mit denen der erste Druckraum beaufschlagt werden kann, zu hemmen oder gar zu vermeiden. Dadurch wird neben einer Anwendung der Klemme im Vakuum bzw. Reinraum auch eine Anwendung in feuchter Umgebung besser ermöglicht.

Für den Einsatz in feuchter Umgebung bzw. im Vakuum oder Reinraum kann für die Gehäuseteile ein geeignetes Material, vorzugsweise aus Stahl, verwendet werden, das vorzugsweise unanfällig für Korrosion ist, um die Abgabe von Rost ins Vakuum oder Reinraum zu vermeiden.

Durch die hier beschriebenen Mitteln einzeln und in Kombination können Klemmen bereitgestellt werden, die verlässlichen im Vakuum und/oder im Reinraum, sowie optional auch in feuchter Umgebung betrieben werden können, ohne, dass dadurch die Dynamik des Öffnens und Schließens der Klemme negativ beeinträchtigt wird.

### KURZBESCHREIBUNG DER FIGUREN

Figur 1A zeigt einen schematischen Querschnitt durch eine erfindungsgemäße nach innen gerichtete, passive pneumatische Klemm- und/oder Bremsvorrichtung im geschlossenen Zustand.
Figur 1B zeigt einen schematischen Querschnitt durch eine erfindungsgemäße nach außen gerichtete, passive pneumatische Klemm- und/oder Bremsvorrichtung im geschlossenen Zustand.
Figur 2A zeigt einen schematischen Querschnitt durch eine erfindungsgemäße nach innen gerichtete, passive pneumatische Klemm- und/oder Bremsvorrichtung im offenen Zustand.
Figur 2B zeigt einen schematischen Querschnitt durch eine erfindungsgemäße nach außen gerichtete, passive pneumatische Klemm- und/oder Bremsvorrichtung im offenen Zustand.
Figur 3A zeigt einen schematischen Querschnitt durch eine erfindungsgemäße nach innen gerichtete, aktive pneumatische Klemm- und/oder Bremsvorrichtung im offenen Zustand.
Figur 3B zeigt einen schematischen Querschnitt durch eine erfindungsgemäße nach außen gerichtete, aktive pneumatische Klemm- und/oder Bremsvorrichtung im offenen Zustand.
Figur 4A zeigt einen schematischen Querschnitt durch eine erfindungsgemäße nach innen gerichtete, aktive pneumatische Klemm- und/oder Bremsvorrichtung im geschlossenen Zustand.
Figur 4B zeigt einen schematischen Querschnitt durch eine erfindungsgemäße nach außen gerichtete, aktive pneumatische Klemm- und/oder Bremsvorrichtung im geschlossenen Zustand.
Figur 5A zeigt einen Querschnitt durch eine erfindungsgemäße pneumatische Klemm- und/oder Bremsvorrichtung in dreidimensionaler Darstellung.
Figuren 5B bis 5D zeigen eine Variante eines aus Figur 5A entnommenen Gehäuseteils.
Figuren 6A bis 6C zeigen eine Ausführung des erfindungsgemäßen elastischen Elements.
Figur 7 zeigt einen Schnitt durch eine Variante eines erfindungsgemäßen Gehäuseteils.
Figur 8 zeigt einen senkrecht zur Klemmebene vorgenommenen Querschnitt durch eine erfindungsgemäße Vorrichtung.
Figur 9 zeigt eine Draufsicht auf ein erfindungsgemäßes elastisches Element.
Figur 10 zeigt eine Draufsicht auf eine Variante eines erfindungsgemäßen Gehäuseteils oder eines Gehäuseteils einer erfindungsgemäßen Vorrichtung.
Figur 11 zeigt einen Ausschnitt im Bereich der zweiten Anschlussdichtung eines senkrecht zur Klemmebene vorgenommenen Querschnitts einer Ausführung einer erfindungsgemäßen Vorrichtung entsprechend der Position der in den Figuren 9 und 10 angedeuteten Schnitten XI durch das elastische Element und das Gehäuseteil.
Figur 12 zeigt einen Ausschnitt im Bereich der ersten Anschlussdichtung eines senkrecht zur Klemmebene vorgenommenen Querschnitts einer Ausführung einer erfindungsgemäßen Vorrichtung entsprechend der Position der in den Figuren 9 und 10 angedeuteten Schnitten XII durch das elastische Element und das Gehäuseteil.

Bauteile, die in mehreren Figuren dargestellt sind, tragen dieselben Referenzzeichen.

### DETAILLIERTE BESCHREIBUNG

Die Erfindung betrifft ein ringförmiges elastisches Element sowie ein Gehäuseteil für eine pneumatische Klemm- und/oder Bremsvorrichtung und eine pneumatische Klemm- und/oder Bremsvorrichtung mit solch einem ringförmigen elastischen Element.

Wenn in diesem Dokument von der Vorrichtung "Klemme" oder "Klemmvorrichtung", der "Klemmkraft" oder dem Vorgang des "Klemmens" gesprochen wird, dann ist gleichermaßen auch die Vorrichtung der "Bremse" oder "Bremsvorrichtung" bzw. die "Bremskraft" bzw. der Vorgang des "Bremsens" umfasst.

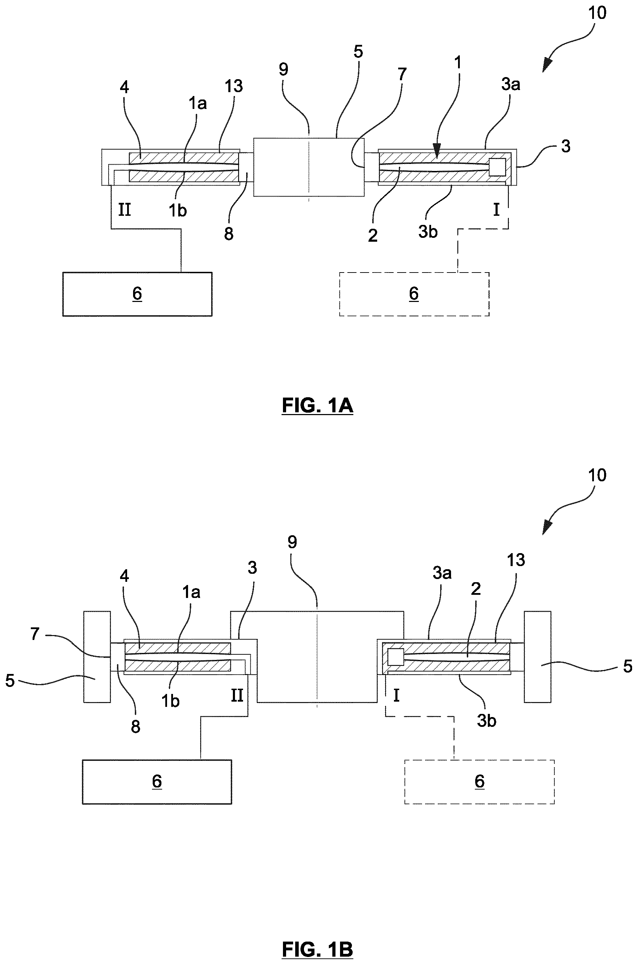

Die Figuren 1A bis 5A und 8 zeigen schematisch Querschnitte durch eine solche erfindungsgemäße Klemmvorrichtung 10 mit einem Gehäuse 3, das zwei Gehäuseteile 3a, 3b umfasst, sowie mit einer in dem Gehäuse 3 angeordneten Feder 1, die mindestens zwei erfindungsgemäße ringförmige elastische Elemente 1a, 1b umfasst.

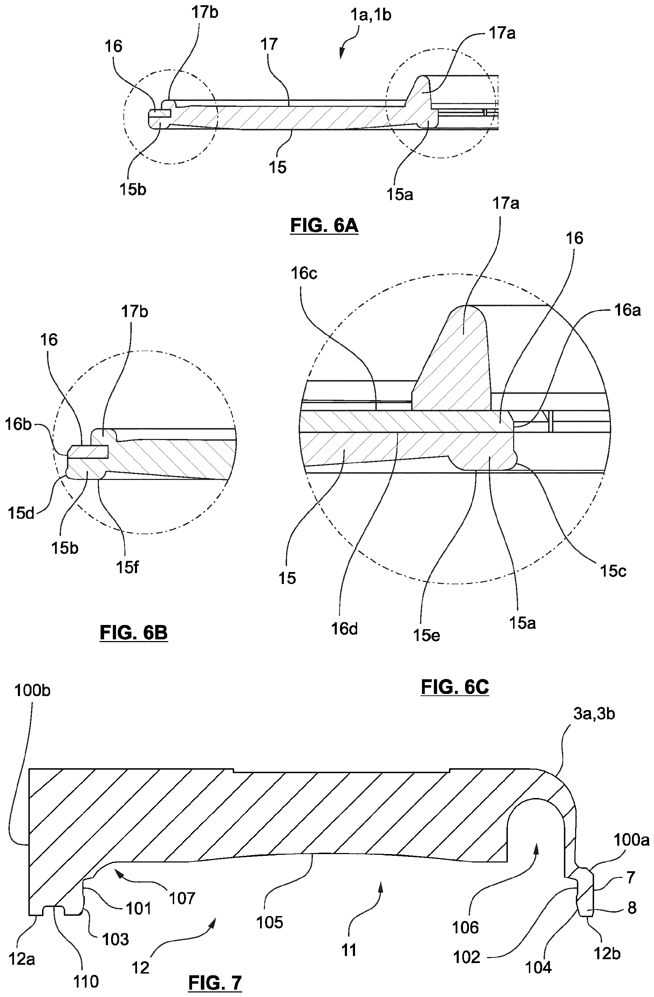

Die erfindungsgemäße Klemmvorrichtung 10, umfasst dabei Folgendes: ein erstes erfindungsgemäßes elastisches Element 1a und ein zweites erfindungsgemäßes elastisches Element 1b; ein Gehäuse 3 umfassend ein erstes Gehäuseteil 3a mit einer Innenfläche und ein zweites Gehäuseteil 3b mit einer Innenfläche wobei die Gehäuseteile 3a, 3b derart zueinander angeordnet und miteinander befestigt sind, dass die Innenflächen der Gehäuseteile 3a, 3b zusammen einen Innenraum 13 innerhalb des Gehäuses 3 abgrenzen; ein oder mehrere Klemmelemente 8 wobei jedes Klemmelement 8 eine Klemmfläche 7 aufweist; eine in dem Innenraum 13 angeordnete Feder 1 umfassend das erste elastische Element 1a und das zweite elastische Element 1a wobei die elastischen Elemente 1a, 1b derart innerhalb des Innenraums 13 angeordnet sind, dass in dem Innenraum 13 ein erster Druckraum 4 zwischen den elastischen Elementen 1a, 1b und den Innenflächen der Gehäuseteile 3a, 3b gebildet wird, wobei der erste Druckraum 4 entlüftbar ist und mit Überdruck eines dem Gehäuse 3 zuführbaren Druckmediums beaufschlagbar ist, wobei das erste elastische Element 1a mit dessen erster Seitenfläche zugewandt zu der Innenfläche des ersten Gehäuseteils 3a in dem Innenraum 13 eingeklemmt ist, und wobei das zweite elastische Element 1b mit dessen erster Seitenfläche zugewandt zu der Innenfläche des zweiten Gehäuseteils 3b in dem Innenraum 13 eingeklemmt ist; wobei die Feder 1 ausgelegt ist, dass bei Be- oder Entlüften des ersten Druckraums 4 oder Beaufschlagung des ersten Druckraums 4 mit Überdruck, eine Biegung mindestens einer der Federplatten der elastischen Elemente 1a, 1b veränderbar ist und dadurch die Vorrichtung 10 zwischen einem geöffneten Zustand, in dem ein zu klemmendes Objekt 5 von den ein oder mehreren Klemmflächen 7 beabstandet ist, und einem geschlossenen Zustand, in dem mindestens eine der ein oder mehreren Klemmflächen 7 eine Klemm- und/oder Bremskraft auf das Objekt 5 übertragen, wechselt. Die erfindungsgemäße Vorrichtung 10 umfasst ferner die eingangs erwähnten Mittel, die einen verlässlichen Betrieb der Vorrichtung im Vakuum und/oder im Reinraum erlauben. Diese Mittel werden im Zusammenhang mit den Figuren 6 bis 12 näher erläutert.

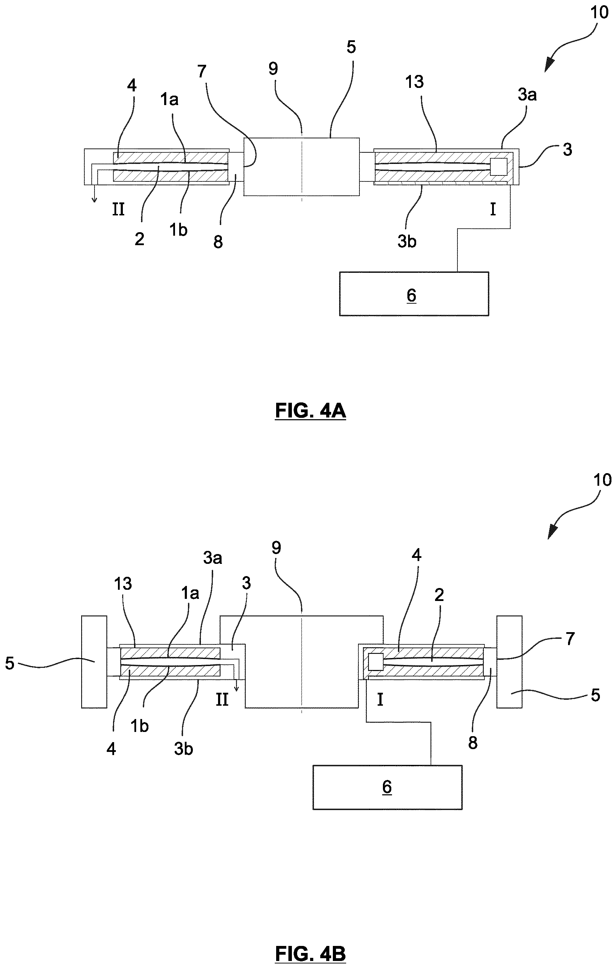

Die Figuren 1A, 1B, 4A und 4B zeigen jeweils solche Klemmvorrichtungen 10 im geschlossenen Zustand indem die Klemmfläche 7 des Klemmelements 8 den Umfang des Objekts 5 berührt. Das Klemmelement 8 wird auch als Klemmlippe bezeichnet. Das Klemmelement 8 kann einstückig mit den Übrigen Teilen des Gehäuseteils 3a, 3b ausgebildet sein oder kann ein von den übrigen Teilen strukturell separiertes Bauteil des Gehäuseteils 3a, 3b sein.

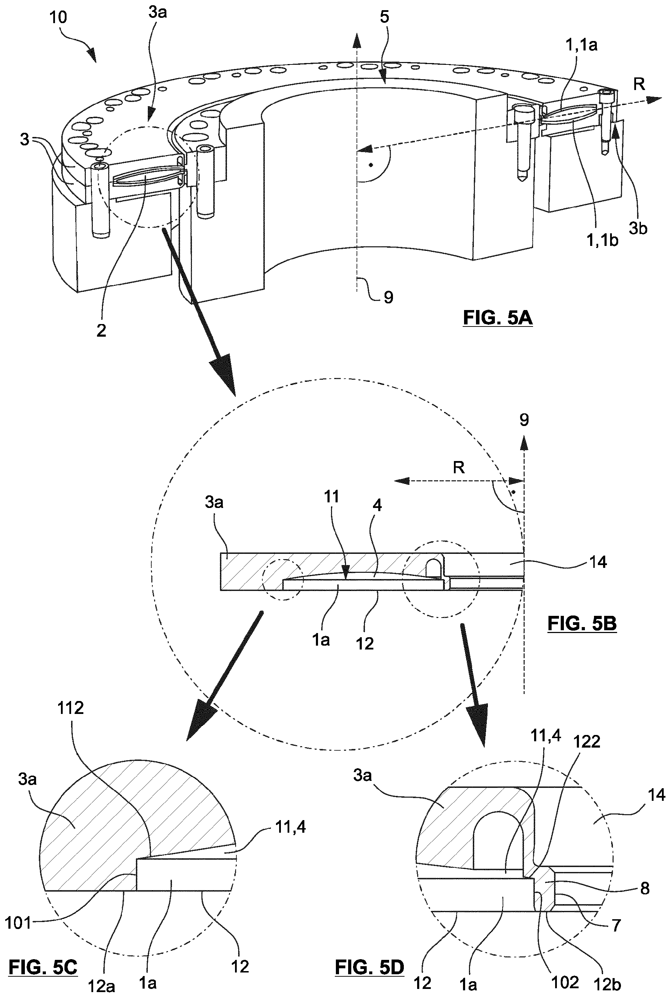

Die Klemmkraft bzw. -wirkung der Klemmfläche 7 auf das zu klemmende Objekt 5 erfolgt in einer Klemmebene, die durch zwei Vektoren aufgespannt wird, die jeweils einen Radius der ringförmigen elastische Elemente 1a, 1b bzw. ringförmigen Aussparung 11 bilden (vgl. Fig. 5A). Die Achse 9 kann durch den Mittelpunkt des Rings der hier als ringförmig beschriebenen Bauteile verlaufen und kann daher als Hauptachse der Klemmvorrichtung 10 bezeichnet werden, die senkrecht zur Klemmebene verlaufen kann. Wenn in diesem Dokument von "innerem" und "äußerem" Vorsprung, Rand oder Ende gesprochen wird, so sind innere(s) Rand, Vorsprung oder Ende näher an der Achse 9 als entsprechend äußere(s) Rand, Vorsprung oder Ende. Entsprechendes kann auch für andere Bauteile gelten.

Die Klemmvorrichtung 10 kann um diese Hauptachse 9 rotationssymmetrisch ausgestaltet sein. Die Hauptachse 9 kann in etwa oder genau mittig durch eine Öffnung der Klemmvorrichtung 10 verlaufen (Öffnung 14 in Fig. 5B). In den Figuren 1A, 4A ist das zu klemmende Objekt 5, beispielsweise eine rotierbare Welle einer Maschine oder eines Tischs, innerhalb der Öffnung 14 platziert und die Klemmkraft der Klemmvorrichtung ist deshalb innerhalb der Klemmebene radial nach innen zur Hauptachse 9 hin (senkrecht zur Hauptachse 9) gerichtet. In Figuren 1B, 4B ist das zu klemmende Objekt 5 außerhalb der Klemmvorrichtung 10 platziert und die Klemmkraft der Klemmvorrichtung ist deshalb innerhalb der Klemmebene radial nach außen von der Hauptachse 9 weg (senkrecht zur Hauptachse 9) gerichtet.

In Fig. 1A, 2A, 3A, 4A befindet sich das Klemmelement 8 zwischen Feder 1 und Öffnung 14 bzw. Hauptachse 9. In Fig. 1B, 2B, 3B, 4B hingegen umgibt das zu klemmende Objekt 5 zumindest teilweise die Klemmvorrichtung 10, sodass sich dort das Klemmelement 8 zwischen Objekt 5 und Öffnung 14 bzw. Hauptachse 9 befindet. In Fig. 1B, 2B, 3B, 4B kann in Öffnung 14 statt dem zu klemmenden Objekt 5 ein die Öffnung 14 zumindest teilweise füllendes Bauteil eingebracht sein, durch das sich die Hauptachse 9 erstreckt.

In Figuren 1A bis 5A ist jeweils die Feder 1 zwischen zwei Anlageflächen (101 und 102 in Fig. 5C und 5D) innerhalb des Gehäuses 3 der Klemmvorrichtungen 10 eingeklemmt und erstreckt sich zwischen den beiden Anlageflächen. Im drucklosen Ausgangszustand der Vorrichtung 10 in den Figuren 1A bis 2B kann die Feder 1 leicht gebogen sein, um in diesem Zustand fest im Gehäuse 3 fixiert zu sein und dasselbe kann für jeden anderen Zustand der Vorrichtung 10 gelten, wobei der Grad der Biegung der Feder 1 davon abhängt, in welchem Zustand sich die Vorrichtung 10 befindet. Ist die Vorrichtung 10 in einem Zustand, in dem die Feder 1 gebogen ist (z.B. stärker gebogen als im drucklosen Ausgangszustand, wie etwa im geöffneten Zustand), kann Entlüften eines inneren Druckraums 2 der Feder 1 und Belüftung eines äußeren Druckraums 4 zum zumindest teilweisen Entspannen der Feder 1 führen während die Feder 1 an die radialen Anlageflächen drückt, deren Abstand sich etwas vergrößert, so dass dadurch das Gehäuse 3 im Bereich des Klemmelements 8 bzw. der Klemmfläche 7 elastisch verformt wird und die Klemmfläche 7 dadurch das Objekt 5 berührt und mit einer (vordefinierten) Klemmkraft gegen das Objekt 5 gedrückt wird, um das Objekt 5 festzuklemmen. Das Objekt 5 ist festgeklemmt und die Klemmvorrichtung 10 ist im geschlossenen Zustand, wie in Figuren 1A und 1B gezeigt. Im geschlossenen Zustand der Vorrichtung 10 kann die Feder 1 auch nach der teilweisen Entspannung immer noch leicht gebogen sein, um in diesem Zustand fest im Gehäuse 3 fixiert zu sein.

Das Klemmelement 8 kann dabei ein elastisches Element, wie etwa eine Federgabel, sein, das im drucklosen Ausgangszustand der Vorrichtung 10 durch die Federkraft der (leicht) verbogenen Feder 1 aus einer Ausgangsposition, in der das elastische Element entspannt ist, in eine verspannte Position gebracht wird, beispielsweise durch Verbiegen der Federgabel 8, bis im drucklosen Ausgangszustand ein Gleichgewicht zwischen einer Rückstellkraft des elastischen Elements 8 und der Federkraft der Feder 1 entsteht. Bei diesem Gleichgewicht kann die Klemmfläche 7 gegen das Objekt 5 drücken.

Durch zusätzliche Beaufschlagung des äußeren Druckraums 4 im geschlossenen Zustand mit Druckluft (beispielsweise mit 4 bar oder 6 bar) besteht die optionale Möglichkeit die Klemmkraft um einen vorbestimmten Wert zu erhöhen. Dies ist in den Figuren 1A, 1B durch die optionale zusätzliche Druckluftpumpe (Booster) 6 und die Schraffierung (Druckluft) im äußeren Druckraum 4 angedeutet. Der äußere Druckraum 4 kann mittels einer Öffnung im Gehäuse 3 mit einem Luftanschluss I (auch als "Close" bezeichnet) verbunden sein, an dem die Druckluftpumpe 6 angeschlossen sein kann.

Hierdurch ist z.B. ein Ansteuern der Vorrichtung 10 derart möglich, dass ein Wechsel zwischen einer (im drucklosen Zustand) gebremsten Bewegung des beaufschlagten Objekts 5 und einem vollständigen Klemmen des Objekts (bei einer ausreichenden Druckbeaufschlagung) erfolgt.

Auch wenn hier beispielhaft zwei Druckräume 2, 4 gezeigt und beschrieben sind, so ist die Klemmvorrichtung 10 auch mit einem einzigen Druckraum betreibbar, der beispielsweise der innere Druckraum 2 oder der äußere Druckraum 4 sein kann.

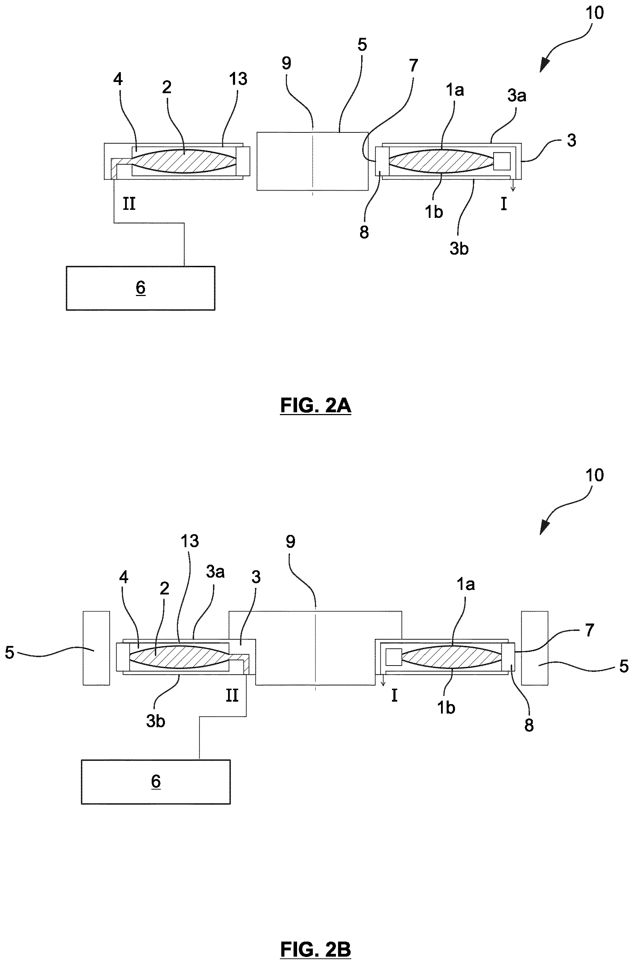

Figuren 2A und 2B zeigen die Klemmvorrichtungen 10 aus den Figuren 1A und 1B jeweils im geöffneten Zustand in dem die Klemmfläche 7 den Umfang des Objekts 5 nicht berührt bzw. von dem Umfang des Objekts 5 beabstandet ist. Der innere Druckraum 2 kann mittels einer Öffnung im Gehäuse 3 mit einem Luftanschluss II (auch als "Open" bezeichnet) verbunden sein, an dem eine Druckluftpumpe 6 angeschlossen sein kann.

Durch Beaufschlagung des inneren Druckraums 2 durch die Druckluftpumpe 6 mit Druckluft (beispielsweise 4 bar oder 6 bar) und Entlüften des äußeren Druckraums 4 wird die Feder 1, verglichen mit dem geschlossenen Zustand aus Fig. 1A, 1B, stärker (konvex) verbogenen bzw. verspannt und es kommt zu einer radialen Verkürzung der Feder 1 bzw. des Abstandes zwischen den beiden Anlageflächen. Die Klemmfläche 7 hebt von dem Objekt 5 ab, um die Klemmung aufzuheben. Das Objekt 5 ist frei beweglich (z.B. um Achse 9 rotierbar oder linear entlang Achse 9 beweglich) und die Klemmvorrichtung 10 ist geöffnet.

Zwischen dem geschlossenen Zustand und dem geöffneten Zustand der Vorrichtung 10 kann hin- und her gewechselt werden.

Solche pneumatischen Klemmen 10 haben gegenüber hydraulischen Klemmen einer Reihe von Vorteilen.

Durch die Verwendung der Kombination aus elastischer Komponente, hier eine Feder 1 samt elastische Elemente 1a, 1b, und Druckluft werden beispielsweise sehr kurze Reaktionszeiten beim Umschalten zwischen dem geöffneten und geschlossenen Zustand erreicht und ebenso eine sichere Klemmung des Objekts 5 bewirkt. Die Feder 1 kann bevorzugt plattenförmig ausgestaltet sein, wie in Fig. 5 näher gezeigt, wobei zwei aufeinanderliegende elastische Elemente 1a, 1b die Feder 1 und den innere Druckraum 2 der Feder 1 zwischen den Platten 1a, 1b bilden. Die Platten 1a, 1b können ebenfalls ringförmig sein, wie in Fig. 5 gezeigt, und können optional zusätzlich radiale Schlitze aufweisen, so dass eine Veränderung des Innendurchmessers mit besonders geringen Kräften möglich ist. Die elastischen Elemente 1a, 1b können, zumindest im Bereich von Schlitzen, mit Gummi beschichtet sein, um die für die Druckluft nötige Dichtheit herzustellen. Die elastischen Elemente 1a, 1b sind generell so druckfest und so elastisch biegbar ausgebildet und in dem Gehäuse 3 der Klemmvorrichtung 10 derart angeordnet, dass innerhalb der Feder 1 zwischen den elastischen Elemente 1a, 1b der innere Druckraum 2 gebildet wird und zwischen eines jeden elastischen Elements 1a, 1b und dem Gehäuse 3 bzw. den Gehäuseteilen 3a, 3b der Klemmvorrichtung 10 der äußere Druckraum 4 gebildet wird. Figur 5 zeigt eine dreidimensionale Ansicht einer Klemmvorrichtung 10 ähnlich zu Figuren 1A und 2A.

Durch Belüften oder Beaufschlagen mit Druckluft des äußeren Druckraums 4 und Entlüften des inneren Druckraums 2, wie in Fig. 1A gezeigt, wird die Feder 1 zumindest teilweise entspannt und bewirkt eine Klemmkraft auf das zu klemmende Objekt 5, insbesondere auf den Umfang einer Welle 5. Dadurch wird bei Energie- bzw. Druckausfall das Objekt 5 geklemmt bzw. die Welle 5 sofort zum Stillstand gebracht und bietet deshalb eine Sicherheitsklemmung. Solche pneumatischen Klemmen 10 können je nach Größe Haltemomente von mehreren 100 Nm und bis zu mehreren 1000 Nm erzielen, die durch zusätzliches Beaufschlagen des äußeren Druckraums 4 mit Druckluft, wie in Fig. 1A durch eine Druckpumpe 6 (Booster) angedeutet, noch erhöht werden können. Hier genügt eine Druckluft von wenigen bar (beispielsweise 4 bar oder 6 bar) für eine Bereitstellung eines Mehrfachen der Haltemomente, die ohne Booster erreicht werden. Dabei wird die Tatsache genutzt, dass geringe transversale Verbiegungen der Platten 1a, 1b (senkrecht zu deren Längsachse) beim Umschalten zwischen geöffneten und geschlossenen Zustand der Klemme 10 große Federkräfte erzeugen, die zum Klemmen oder zum Lösen vorgespannter Klemmvorrichtungen 10 genutzt werden können. Somit wird ein sicheres Klemmen und Lösen auch von sich schnell drehenden Maschinenwellen 5 ermöglicht.

Auch sind bei Pneumatikmaterial die Kosten und der Montageaufwand im Vergleich zur Hydraulikmaterial niedriger und es entsteht durch Verwendung von Druckluft keinerlei Mehraufwand zur Herstellung von Sauberkeit an der Anlage. Auch ermöglichen solche pneumatischen Klemmen eine geringe Baugröße, da eine geringe transversale Verbiegung und eine geringe (Änderungen der) longitudinale Ausdehnung der Feder, und dadurch geringe Volumina der Druckräume, genügen, um die erforderlichen Klemmkräfte aufzubringen.

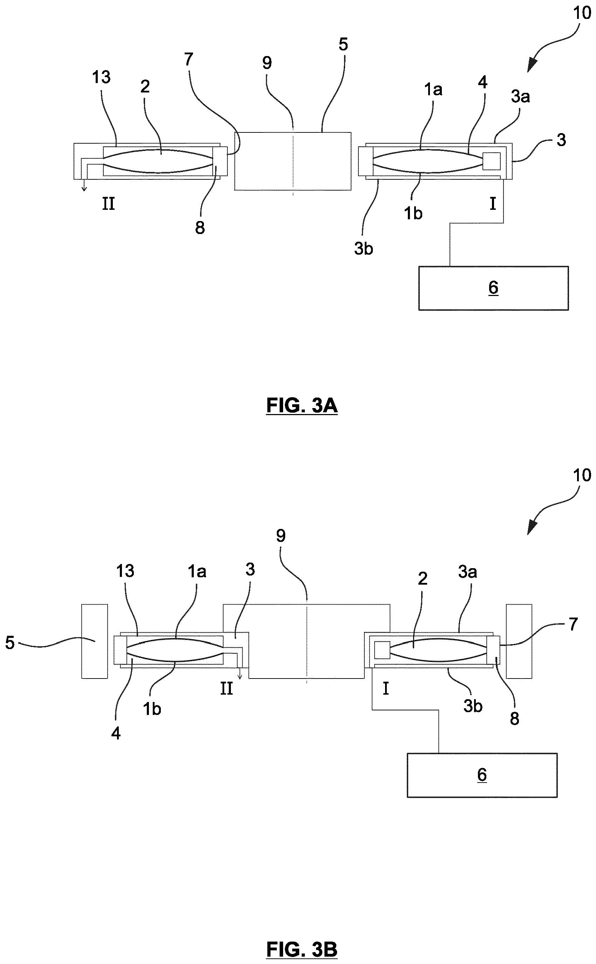

Bei pneumatischen Klemmen unterscheidet man prinzipiell zwischen passiven Klemmvorrichtungen 10, wie in Fig. 1A bis 2B gezeigt, und aktiven Klemmvorrichtungen 10, wie in Fig. 3A bis 4B gezeigt.

Die Feder 1 kann im drucklosen Ausgangszustand unterschiedlich stark (transversal) verbogen sein und damit unterschiedlich stark radial verkürzt sein. Die Innenseite des Gehäuses 3 kann an die Verbiegung der elastischen Elemente 1a, 1b angepasst sein oder diese definieren. Eine entsprechende Anschlagsfläche für die elastischen Elemente 1a, 1b kann beispielsweise durch eine Gehäuseinnenwandung gebildet werden. Die Gehäuseinnenwandung kann komplementär (z.B. konkav) zu einer (z.B. konvexen) Verbiegung der elastischen Elemente 1a, 1b ausgebildet sein.

Bei passiven Klemmvorrichtungen 10 wird im drucklosen Ausgangszustand die Feder 1 in der Regel leicht elastisch (z.B. konvex) verbogen bzw. ist vorgespannt und die Klemmvorrichtungen 10 kann geschlossen sein (Fig. 1A, 1B). Die Klemmvorrichtung 10 wird nur durch Krafteinwirkung von Innen über Beaufschlagung des inneren Druckraums 2 mit Druckluft geöffnet (Fig. 2A, 2B). Meist ist die Feder 1 im drucklosen Ausgangszustand etwas verbogen, so dass diese im Klemmfall oder im Fall von Druckabfall die durch die in der Feder 1 gespeicherte Energie gegebene Federkraft auf das zu klemmende Objekt 5 als Klemmkraft übertragen wird, um das Objekt 5 zu klemmen.

Bei aktiven Klemmvorrichtungen 10 wird im drucklosen Ausgangszustand (Fig. 3A, 3B) die Feder 1 stärker, insbesondere stärker konvex, transversal nach außen gekrümmt als bei passiven Klemmvorrichtungen, so dass sich der Abstand zwischen den beiden radialen Anlageflächen verkürzt und die Klemmvorrichtung 10 geöffnet ist. Es wird keine Klemmkraft über Klemmfläche 7 auf das Objekt 5 bewirkt. Das Objekt ist frei, da die Klemmfläche 7 das Objekt 5 nicht berührt bzw. von dem Objekt 5 beabstandet ist.

Durch plastische Verformung der elastischen Elemente 1a, 1b kann die Feder 1 bei gleichem Gehäuse 3 im drucklosen Ausgangszustand stärker transversal nach außen gekrümmt und damit stärker radial verkürzt sein, als bei passiven Klemmvorrichtungen. Diese geringere radiale Ausdehnung der elastischen Elemente 1a, 1b im drucklosen Ausgangszustand kann zu einem geöffneten Zustand der Klemmvorrichtung 10 im drucklosen Ausgangszustand führen. Auch bei plastischer Verformung sind die elastischen Elemente 1a, 1b elastisch gebogen und drücken gegen die Anlageflächen damit die Feder im Gehäuse fixiert ist. Der Innenraum des Gehäuses bzw. die Aussparungen können die durch plastische Verformung stärker bewirkte Krümmung im Ausgangszustand aufnehmen.

Die Klemmkraft muss nun aktiv von außen induziert werden, wie in Fig. 4A und 4B gezeigt, um die Klemme in den geschlossenen Zustand zu überführen. Hier wird durch eine Druckluftpumpe 6 Druckluft in den äußeren Druckraum 4 eingebracht und somit die Feder 1 derart von außen mit Druckluft beaufschlagt, dass die Feder 1 aktiv entspannt wird, sich die Krümmung der Feder 1 reduziert, sich der Abstand zwischen den beiden Anlageflächen vergrößert, und sich das Gehäuse 3 im Bereich des Klemmelements 8 bzw. der Klemmfläche 7 elastisch verformt, sodass die Klemmfläche 7 das Objekt 5 berührt und eine Klemmkraft auf das Objekt 5 bewirkt und das Objekt 5 dadurch festgeklemmt wird. Die aktive Klemmvorrichtung 10 ist dann im geschlossenen Zustand.

Je nach Anwendungsgebiet und vorgeschriebenen Sicherheitsbestimmungen wird daher auf ein Aktiv- oder Passivklemmsystem 10 zurückgegriffen. Ist primär eine Sicherheitsklemmung gewünscht, wird in der Regel eine passive Klemmvorrichtung verwendet. Mit solchen pneumatischen Passivklemmsystemen ist es möglich, bereits im drucklosen Zustand bei einer entsprechenden Montage der Vorrichtung in einer Gesamtvorrichtung eine vorbestimmte Klemmkraft zu erzeugen, mit welcher das zu klemmende Objekt 5 beaufschlagt wird. Durch die Beaufschlagung mit Überdruck oder Unterdruck können die auf dieses Objekt übertragenen Kräfte erhöht, reduziert oder ganz aufgehoben werden, was vielfältige Anwendungen eröffnet. Soll hingegen mit der Klemmvorrichtung primär ein bewusster Arbeitsvorgang, wie ein Werkzeugwechsel, durchgeführt werden, wird in der Regel eine aktive Klemmvorrichtung verwendet.

Wie in Figur 5A dargestellt, umfasst das Gehäuse 3 der erfindungsgemäßen Klemmvorrichtungen 10 zwei Gehäuseteile 3a, 3b, die mit Befestigungsmittel, wie etwa Schrauben, miteinander befestigt und so montiert sind, dass im montierten Zustand die beiden Gehäuseteile 3a, 3b den Innenraum 13 zwischen den Gehäuseteilen 3a, 3b innerhalb des Gehäuses 3 definieren in dem die Feder 1 samt deren erfindungsgemäßer ringförmigen elastischen Elemente 1a, 1b angeordnet sind. Die Gehäuseteile 3a, 3b definieren jeweils eine Aussparung 11, die ebenfalls ringförmig ist und die der Aufnahme der ringförmigen elastischen Elemente 1a, 1b dienen, wie in Figuren 5A bis 5D dargestellt. Zumindest ein Teil der ersten Anlagefläche 101 des Gehäuseteils kann (im Wesentlichen) senkrecht zur radialen Richtung R der ringförmigen Aussparung 11 verlaufen und/oder ein Teil der zweiten Anlagefläche 102 des Gehäuseteils kann (im Wesentlichen senkrecht) zur radialen Richtung R der ringförmigen Aussparung 11 verlaufen.

Durch die Mitte des Gehäuses 3 hindurch erstreckt sich eine Öffnung 14 (Fg. 5B) in die das zu klemmende Objekt 5, wie etwa eine Welle, eingeführt werden kann. Das Gehäuse kann sich bis zu 360° um diese Öffnung herum erstrecken und umschließt zumindest teilweise das Objekt 5 in zumindest einer Ebene die als Klemmebene bezeichnet wird. Die zentrale Hauptachse 9 der Klemmvorrichtungen verläuft mittig durch die Öffnung 14 und senkrecht zu der Klemmebene. In Klemmvorrichtungen nach Fig. 1A, 2A, 3A, 4A, 5A verläuft die Hauptachse 9 mittig durch die Welle entlang deren Längsachse.

Entlang des Umfangs des Gehäuses 3 oder der Öffnung 14 befindet sich eine oder mehrere der Klemmflächen 7 welche im Falle einer elastischen Verformung des Gehäuses 3 im Bereich des Klemmelements 8 oder der Klemmfläche 7 die Klemmkraft auf den äußeren Umfang des Objekts 5 bewirkt und dadurch das Objekt 5 klemmen kann. Für eine wirksame Öffnung und Schließung der Klemmvorrichtung 10 im Bezug auf das zu klemmende Objekt 5, ohne Gefahr der Beschädigung des Objekts 5, ist eine symmetrische Verteilung der Klemmkraft entlang der Klemmfläche 7 bzw. entlang des Umfangs des Objekts 5 wünschenswert. Eine nicht symmetrische Verteilung der Klemmkraft kann zu Beschädigungen des Objekts 5 führen. Vorzugsweise sind eine oder beide Anlageflächen 101, 102 innerhalb der Klemmebene kreisförmig ausgestaltet. Vorzugsweise ist die Klemmfläche 7 innerhalb der Klemmebene kreisförmig ausgestaltet. Das Klemmelement 8 kann ringförmig ausgestaltet sein. Alle hierin beschriebenen ring- oder kreisförmigen Bauteile können jeweils einzeln oder in Kombination als Mittelpunkt den Schnittpunkt der Hauptachse 9 mit der Klemmebene aufweisen (z.B. Mittelpunkt der Öffnung 14).

Figur 5B zeigt eine Ausführung des erfindungsgemäßen Gehäuseteils(hier das obere Gehäuseteil 3a aus Fig. 5A), wobei das Gehäuseteil 3a eine ringförmige Aussparung 11 zum Einklemmen des ringförmigen elastischen Elements 1a aufweist, und wobei das Gehäuseteil 3a eine durch die Aussparung 11 definierte Innenfläche (vgl. 105 in Fig. 7) aufweist. Die ringförmige Aussparung 11 definiert vorzugsweise eine ringförmige Öffnung 12 im Gehäuseteil, wobei die ringförmige Öffnung zwischen einem ersten ringförmigen Rand 12a des Gehäuseteils und einem zweiten ringförmigen Rand 12b des Gehäuseteils gebildet ist. Das elastische Element 1a, ist zwischen dem ersten ringförmigen Rand 12a und dem zweiten ringförmigen Rand 12b einklemmbar.

Wenn das elastische Element 1a mit der ersten Seitenfläche (vgl. 16c in Fig. 6C) zugewandt zu der Innenfläche durch die Öffnung 12 in die Aussparung 11 eingeführt und in der Aussparung 11 eingeklemmt wird, wird zwischen der Innenfläche und dem elastischen Element 1a der erste Druckraum 4 gebildet. Das erfindungsgemäße elastische Element hat dabei die eingangs erwähnten Mittel, die eine verlässlichen Verwendung der Komponente im Vakuum und/oder im Reinraum erlauben. Diese Mittel werden im Zusammenhang mit den Figuren 6 bis 12 näher erläutert.

Wie in den Figuren 5C und 5D gezeigt, erstreckt sich das dargestellte elastische Element 1a der Feder 1 von einer ersten Anlageflächen 101 innerhalb des Gehäuseteils 3a bis zu einer zweiten Anlagefläche 102 innerhalb des Gehäuseteils 3a und kann diese berühren. Die erste Anlagefläche 101 ist dabei vom Mittelpunkt der Öffnung 14 ausgesehen radial weiter außerhalb angeordnet als die zweite Anlagefläche 102.

Figur 5C zeigt den Abschnitt des in Figur 5B dargestellten Gehäuseteils 3a in dem die obere Platte 1a der Feder 1 auf die erste Anlagefläche 101 trifft und mit dieser vorzugsweise in Berührung steht. Figur 5D zeigt den Abschnitt des in Figur 5B dargestellten Gehäuseteils 3a in dem die obere Platte 1a der Feder 1 auf die zweite Anlagefläche 102 trifft und mit dieser vorzugsweise in Berührung steht. Es ist jedoch auch möglich, dass sich radial zwischen dem elastischen Element 1a und ein oder mehreren der Anlageflächen 101, 102 jeweils ein oder mehrere weitere Komponenten befinden, über die das elastische Element 1a seine Federkraft auf die Anlageflächen 101, 102 ausübt.

Wie in Figuren 5B, 5D ersichtlich, wird das elastische Element 1a in der Aussparung 11 zwischen Innenseiten des Gehäuseteils 3a eingeklemmt. Jede der Platten der Feder 1 wird in Richtung der Hauptachse 9 der Klemmvorrichtungen 10 durch die Öffnung 12 in die Aussparung 11 des jeweils dazugehörigen Gehäuseteils bei der Montage an Innenflächen des Gehäuseteils 3a entlang eingeführt, bis die jeweilige Platte am Ende jeder der beiden Anlageflächen 101, 102 an einen Anschlag 112, 122 stößt und deshalb nicht weiter in die Aussparung 11 eingeführt werden kann. Da die Ausdehnung des elastischen Elements 1a in der Klemmebene bzw. in radialer Richtung der ringförmigen Aussparung größer sein kann als die Ausdehnung des durch das Gehäuseteil definierten Innenraums, kann die Platte 1a im drucklosen Ausgangszustand verbogen bzw. vorgespannt sein.

In den Zeichnungen der Figuren 6A bis 6C werden Ausführungen der Mittel des erfindungsgemäßen elastischen Elements zur Anwendung im Vakuum und/oder im Reinraum, sowie die optionalen Mittel für die Anwendung in feuchter Umgebung näher dargestellt.

Figur 6A zeigt ein erfindungsgemäßes ringförmiges elastisches Element 1a, 1b für eine Klemm- und/oder Bremsvorrichtung 10, das Element 1a, 1b umfassend: eine ringförmige Federplatte 16 wobei die ringförmige Federplatte 16 eine erste ringförmige Seitenfläche 16c und eine zweite ringförmige Seitenfläche 16d aufweist; ein optionales (erstes) Dichtungselement 17 wobei das (erste) Dichtungselement 17 vorzugsweise auf der ersten Seitenfläche 16c der Federplatte 16 angeordnet ist; ein (zweites) Dichtungselement 15 wobei das (zweite) Dichtungselement 15 auf der zweiten Seitenfläche 16d der Federplatte 16 angeordnet ist, und wobei das (zweite) Dichtungselement 15 in einem Bereich eines inneren Randes 16a der ringförmigen Federplatte 16 einen inneren Vorsprung 15a ausbildet und in einem Bereich eines äußeren Randes 16b der ringförmigen Federplatte 16 einen äußeren Vorsprung 15b ausbildet, wobei der innere und/oder äußere Vorsprung 15a, 15b des (zweiten) Dichtungselements 15 jeweils zumindest abschnittsweise eine Ausbeulung 15c, 15d ausbildet. Vorzugsweise bildet das optionale (erste) Dichtungselement 17 einen ersten Vorsprung 17a aus.

Die Figuren 6B und 6C zeigen, dass der erste Vorsprung 17a zwischen dem inneren 16a und äußeren Rand 16b der ringförmigen Federplatte 16 ausgebildet ist; hier ist beispielhaft der erste Vorsprung 17a in einem Bereich des inneren 16a oder äußeren 16b Randes der ringförmigen Federplatte 16 ausgebildet.

Figuren 6A und 6B zeigen ferner dass das erste Dichtungselement 17, vorzugsweise in einem Bereich des äußeren Randes 16b der ringförmigen Federplatte 16, auf der ersten Seitenfläche 16c einen optionalen zweiten Vorsprung 17b ausbildet.

Jeder der Vorsprünge 15a, 15b, 17a, 17b des ersten und/oder zweiten Dichtungselements 15, 17 kann zumindest abschnittsweise ringförmig sein und sich ringförmig um die Achse 9 erstrecken. Jeder der Vorsprünge 15a, 15b, 17a, 17b des ersten und/oder zweiten Dichtungselements 15, 17 kann jeweils an der Federplatte 16 fixiert, vorzugsweise vulkanisiert, sein oder von der Federplatte 16 lösbar, vorzugsweise als O-Ring, angeordnet sein.

Figuren 6A und 6C zeigen zudem, dass eine Längsachse des ersten Vorsprungs 17a des ersten Dichtungselements 17 (im Wesentlichen) senkrecht zu der ersten Seitenfläche 16c der Federplatte 16 verläuft.

Wie in Figuren 6B und 6C gezeigt, weist der innere Vorsprung 15a und/oder äußere Vorsprung 15b des zweiten Dichtungselements 15 jeweils eine zumindest abschnittsweise plane Oberfläche 15e, 15f auf, die als Auflagefläche beispielsweise gegenüber einer (inneren) Gehäusewand oder einem anderen elastischen Element dient um so den zweiten Druckraum 2 abzugrenzen und abzudichten. In diese Figuren ist zudem gezeigt dass der innere und/oder äußere Vorsprung 15a, 15b des zweiten Dichtungselements 15 jeweils zumindest abschnittsweise eine sich radial erstreckende Ausbeulung 15c, 15d ausbildet.

Vorzugsweise erstreckt sich die Ausbeulung 15d des äußeren Vorsprungs 15b des zweiten Dichtungselements 15, wie in Figur 6B gezeigt, radial nach außen, vorzugsweise radial nach außen über den äußeren Rand 16a der Federplatte 16 hinweg. Vorzugsweise ist die Ausbeulung 15d zur planen Oberfläche 15f benachbart oder angrenzend. Vorzugsweise geht die plane Oberfläche 15f in die Ausbeulung 15d über.

Vorzugsweise erstreckt sich die Ausbeulung 15c des inneren Vorsprungs 15a des zweiten Dichtungselements 15, wie in Figur 6C gezeigt, radial nach innen, vorzugsweise radial nach innen über den inneren Rand 16a der Federplatte 16 hinweg. Vorzugsweise ist die Ausbeulung 15c zur planen Oberfläche 15e benachbart oder angrenzend. Vorzugsweise geht die plane Oberfläche 15e in die Ausbeulung 15c über.

Das erste Dichtungselement 17 und/oder das zweite Dichtungselement 15 können einzeln oder beide aus einem elastischen Material, vorzugsweise aus Gummi oder einem anderen geeigneten Material sein, das auf der Federplatte 16 fixiert (z.B. vulkanisiert) ist.

Figur 7 zeigt ein erfindungsgemäßes Gehäuseteil 3a, 3b. Das Gehäuseteil weist vorteilhafte und bevorzugte Anpassungen für das erfindungsgemäße elastische Element 1a, 1b auf.

Das Gehäuseteil 3a, 3b umfasst eine ringförmige Aussparung 11 zum Einklemmen des ringförmigen elastischen Elements 1a, 1b, wobei die Aussparung 11 einen ersten ringförmigen Rand 12a und einen zweiten ringförmigen Rand 12b einer ringförmigen Öffnung 12 des Gehäuseteils 3a, 3b ausbildet, wobei die ringförmige Aussparung 11 eine Innenfläche 105 des Gehäuseteils 3a, 3b zwischen dem ersten ringförmigen Rand 12a und dem zweiten ringförmigen Rand 12b definiert, wobei die Innenfläche 105 im Bereich des ersten ringförmigen Rands 12 eine erste Schräge 103 (oder lange Fase genannt) ausbildet und die Innenfläche 105 im Bereich des zweiten ringförmigen Rands 12b eine zweite Schräge 104 (oder lange Fase genannt) ausbildet, wobei die Schrägen 103, 104 derart ausgerichtet sind, dass sich die ringförmige Öffnung 12 zu den ersten und zweiten Rändern 12a, 12b hin vergrößert.

Die Innenfläche 105 kann eine erste Anlagefläche 101 und eine zweite Anlagefläche 102 bilden, die ausgebildet sind dazwischen die Federplatte 16 des erfindungsgemäßen elastischen Elements 1a, 1b einzuklemmen, wobei die erste Schräge 103 zwischen der ersten Anlagefläche 101 und dem ersten ringförmigen Rand 12a angeordnet ist und wobei die zweite Schräge 104 zwischen der zweiten Anlagefläche 102 und dem zweiten ringförmigen Rand 12a angeordnet ist. Wenn das elastische Element 1a, 1b mit der ersten Seitenfläche 16c zugewandt zu der Innenfläche 105 in der Aussparung 11 eingeklemmt ist, werden die Ausbeulungen 15c, 15d mit den Schrägen 103, 104 in vorzugsweise abdichtenden Kontakt gebracht.

Wie in Figur 7 gezeigt, kann die erste Anlagefläche 101 eine erste Schräge 103 (oder lange Fase genannt) ausbilden oder in diese übergehen und/oder die zweite Anlagefläche 102 eine zweite Schräge 104 (oder lange Fase genannt) ausbilden oder in diese übergehen, wobei die Schrägen 103, 104 jeweils vorzugsweise derart ausgerichtet sind, dass sich die ringförmige Öffnung 12 bzw. die Aussparung 11 zu den ersten und zweiten Rändern 12a, 12b hin vergrößert (vgl. Fig. 7 und 5B). Durch jede dieser Schrägen 103, 104 wird weitestgehend vermieden, dass eine das Klemmelement 8 verbiegende Kraft seitens des zweiten Dichtungselements 15 auf das Klemmelement 8 übertragen wird, sondern vielmehr das Federblech 16, bzw. der innere Rand 16a, primär die Kraftübertragung zum Klemmen bzw. Bremsen des Objekts 5 auf das Klemmelement 8 und die Klemmfläche 7 überträgt. Dies schont das zweite Dichtungselement 15 macht den Vorgang des Öffnens und Schließens der Vorrichtung verlässlicher.

Die Ausbeulungen 15c, 15d sind vorgesehen, da diese den Raum an den Schrägen 103, 104 ausfüllen und in Kontakt mit den Schrägen 103, 104 treten. Für die Dichtheit des ersten Druckraums 4 gegen den Spalt an dem Übergang der Klemmelemente 8 angrenzender Gehäuseteile 3a, 3b sind die Ausbeulungen 15c, 15d vorteilhaft. Die Ausbeulungen am Gehäuserand mit der Schräge 103, 104 sind vorteilhaft dafür, dass beim Betrieb des ersten Druckraums 4 kaum oder kein Medium über den Gehäuserand ein- bzw. abströmt.

Die planen Oberflächen 15e, 15f erhöhen zum Einen den Widerstand gegen die Durchlässigkeit eines Druckmediums (insb. Gase) beim Beaufschlagen des zweiten Druckraums 2 mit dem Druckmedium. Die planen Oberflächen 15e, 15f verringern oder verhindern das Überströmen eines Mediums zwischen dem ersten Druckraum 4 und dem zweiten Druckraum 2. Die planen Oberflächen 15f und 15e unterstützen zudem das Verdrängen der Ausbeulungen 15c, 15d gegen die Schrägen 103, 104 am Gehäuse und damit die oben beschriebenen Wirkungen der Ausbeulungen. Diese Unterstützung ist besonders stark ausgeprägt, wenn, wie im Zusammenhang mit den Figuren 6B und 6C beschrieben, die plane Oberfläche 15e bzw. 15f and die dazugehörige Ausbeulung 15c bzw. 15d angrenzend ist und/oder in diese übergeht. Die planen Oberflächen und die jeweils dazugehörigen Ausbeulungen bilden somit eine Kombination von Merkmalen, die synergistisch zusammenwirken, jedoch einzeln vorliegen können. Für die Betrachtung des Vakuumbetriebes ist jedes der Dichtungselemente 17a und 17b als zusätzliche Sperre zu betrachten und unterstützt die Dichtheit des ersten Druckraums 4 gegen die Umgebung.

Das Gehäuseteil 3a, 3b kann eine, vorzugsweise kreisförmige, Rille oder Nut 110 zur Aufnahme von einem O-Ring aufweisen. Die Rille oder Nut 110 kann das Gehäuseteil 3a, 3b entlang des Umfangs des Gehäuseteils in dem Bereich des ersten ringförmigen Rands 12a, oder zwischen einem äußeren Rand 100b des Gehäuseteils und der ersten Anlagefläche 101 oder der Aussparung 11, vorzugsweise vollständig umlaufen. Die Rille oder Nut 110 kann das Gehäuseteil 3a, 3b alternativ oder zusätzlich entlang des Umfangs des Gehäuseteils in dem Bereich des zweiten ringförmigen Rands 12a, oder zwischen einem inneren Rand 100a des Gehäuseteils und der zweiten Anlagefläche 102 oder der Aussparung 11, vorzugsweise vollständig umlaufen.

Um nun eine zusätzliche bevorzugte Dichtheit zur Anwendung in einer feuchten Umgebung zu gewährleisten, ist das erste Dichtungselement vorgesehen. Wenn das elastische Element 1a, 1b mit der ersten Seitenfläche 16c zugewandt zu der Innenfläche 105 in der Aussparung 11 eingeklemmt ist, wird der erste Vorsprung 17a des ersten Dichtungselements 17 einen vorzugsweise abdichtenden Kontakt mit einem ersten Abschnitt der Innenfläche 105 des Gehäuseteils 3a, 3b herstellen. Der erste Abschnitt kann eine Einbuchung oder Senke 106 des Gehäuseteils 3a, 3b aufweisen. Vorzugsweise sind die Oberflächenformen des ersten Vorsprungs 17a und des ersten Abschnitts 106 zumindest teilweise komplementär, um einen besonders effektiven abdichtenden Kontakt herzustellen. Wenn das elastische Element 1a, 1b mit der ersten Seitenfläche 16c zugewandt zu der Innenfläche 105 in der Aussparung 11 eingeklemmt ist, wird der zweite Vorsprung 17b des ersten Dichtungselements 17 einen vorzugsweise abdichtenden Kontakt mit einem anderen Abschnitt der Innenfläche 105 des Gehäuseteils 3a, 3b herstellen. Dieser andere Abschnitt kann eine Einbuchung oder Senke 107 des Gehäuseteils 3a, 3b aufweisen. Vorzugsweise sind die Oberflächenformen des zweiten Vorsprungs 17b und des Abschnitts 107 zumindest teilweise komplementär, um einen besonders effektiven abdichtenden Kontakt herzustellen. Durch jeden der beiden Vorsprünge 17a, 17b wird eine strömungstechnische Verbindung zwischen dem ersten Druckraum 4 und der Umgebung des Gehäuses, insbesondere im Bereich des Übergangs zweier angrenzender Gehäuseteile 3a, 3b, gehemmt oder ganz unterbunden.

Vorzugsweise ist das Gehäuseteil aus einem Material, das unanfällig für Korrosion ist.

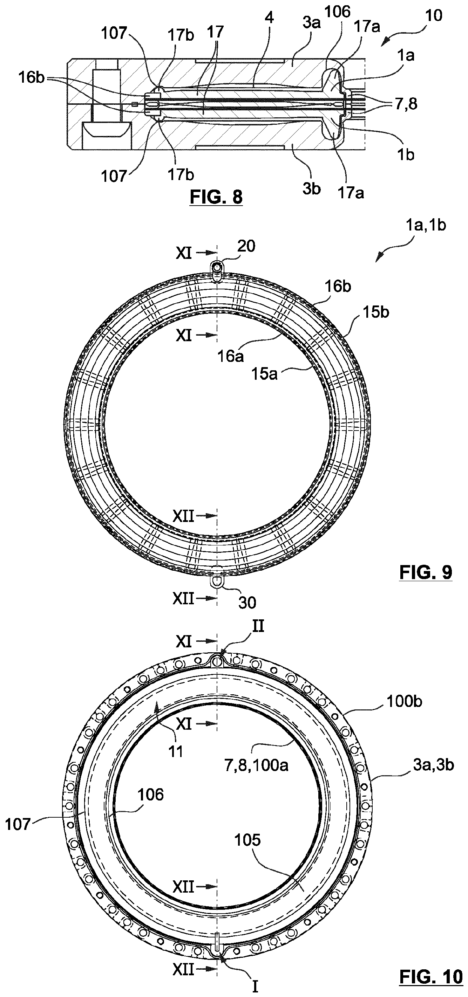

Figur 8 zeigt eine erfindungsgemäße Klemm- und/oder Bremsvorrichtung 10. In Figur 8 ist beispielhaft eine Vorrichtung 10 mit einer nach innen gerichteten Klemmwirkung wie in den Figuren 1A, 2A und 5A gezeigt.

In Figur 8 stellt der erste Vorsprung 17a des ersten Dichtungselements 17 zumindest eines der elastischen Elemente 1a, 1b einen vorzugsweise abdichtenden Kontakt mit einem ersten Abschnitt (z.B. 106) der Innenfläche 105 eines der Gehäuseteile 3a, 3b her, um dadurch eine Strömungsverbindung zwischen einem Bereich des ersten Druckraums 4 und einem Übergang zwischen den Gehäuseteilen 3a, 3b zumindest zu hemmen. Der Kontakt kann zumindest teilweise abdichtend sein gegenüber einem Medium, vorzugsweise ein Fluid oder eine Flüssigkeit, das von außerhalb der Vorrichtung 10 durch den Spalt an dem Übergang der Gehäuseteile 3a, 3b bzw. Klemmelemente 8 in das Gehäuse 3 eindringt.

Der Bereich des ersten Druckraumes 4 ist in Figur 8 zwischen dem ersten Vorsprung 17a des ersten Dichtungselements 17 des zumindest einen elastischen Elements 1a, 1b und dem äußeren Rand 16b der Federplatte 16 des zumindest einen elastischen Elements 1a, 1b, oder des zweiten Vorsprungs 17b des ersten Dichtungselements 17 des zumindest einen elastischen Elements, angeordnet.

Der optionale zweite Vorsprung 17b des ersten Dichtungselements 17 zumindest eines der elastischen Elemente 1a, 1b stellt einen Kontakt mit einem zweiten Abschnitt (z.B. 107) der Innenfläche 105 des Gehäuseteils 3a, 3b her, wobei der zweite Abschnitt der Innenfläche 105 vorzugsweise zwischen der ersten Anlagefläche 101 und der zweiten Anlagefläche 102 des Gehäuseteils 3a, 3b liegt. Auch dieser Vorsprung kann die strömungstechnische Verbindung des ersten Druckraums 4 mit dem Bereich außerhalb der Klemmelement 8 reduzieren. Die Innenfläche 105 kann ein oder mehrere Einbuchtungen oder Senken 106, 107 aufweisen, wobei die Einbuchtung oder Senke 106, 107 vorzugsweise in ihrer Form komplementär zur Oberfläche des sie kontaktierenden Vorsprungs 17a, 17b ist.

Aus der Zusammenschau der Figuren 6, 7 und 8 wird ersichtlich, dass die erste Anlagefläche 101 jedes Gehäuseteils 3a, 3b die erste Schräge 103 ausbildet und die zweite Anlagefläche 102 des jedes Gehäuseteils 3a, 3b die zweite Schräge 104 ausbildet, wobei die Ausbeulung 15c des inneren Vorsprung 15a des zweiten Dichtungselements 15 des ersten elastischen Elements die zweite Schräge 104 der zweiten Anlagefläche 102 des Gehäuseteils 3a, 3b berührt, und wobei die Ausbeulung 15d des äußeren Vorsprungs 15b des zweiten Dichtungselements 15 des ersten elastischen Elements die erste Schräge 103 der ersten Anlagefläche 101 des Gehäuseteils 3a, 3b berührt.

Das erste elastische Element 1a und das zweite elastische Element 1b sind in Figur 8 derart in dem Innenraum 13 eingeklemmt sind, dass sich die planen Oberflächen 15e der inneren Vorsprünge 15a des zweiten Dichtungselements 15 der elastischen Elemente 1a, 1b gegenseitig berühren und/oder die planen Oberflächen 15f der äußeren Vorsprünge 15b der zweiten Dichtungselementen der elastischen Elemente 1a, 1b gegenseitig berühren, um so den zweiten Druckraum 2 zu begrenzen und diesen insbesondere während dessen Beaufschlagen mit Druckmedium abzudichten.

Figur 9 zeigt eine Ausführung des erfindungsgemäßen elastischen Elements 1a, 1b mit einer ersten Anschlussdichtung 30 und/oder einer zweiten Anschlussdichtung 20.

Zwischen einem Abschnitt der zweiten Anschlussdichtung 20 und einem Abschnitt der ersten Anschlussdichtung 30 kann die ringförmige Federplatte 16 angeordnet sein. Die erste Anschlussdichtung 30 und die zweite Anschlussdichtung 20 können an gegenüberliegenden Abschnitten des inneren Rands 16a oder äußeren Randes 16b der ringförmige Federplatte 16 angeordnet sein.

Die erste Anschlussdichtung 30 und/oder die zweite Anschlussdichtung 20 kann jeweils aus einem elastischen Material, vorzugsweise aus Gummi, sein.

Die erste Anschlussdichtung 30 kann zumindest abschnittsweise radial nach innen oder außen versetzt zu dem inneren Rand 16a und/oder äußeren Rand 16b (vgl. Fig. 9) der Federplatte 16 des elastischen Elements 1a, 1b angeordnet sein. Die erste Anschlussdichtung 30 kann Teil des ersten Dichtungselements 17 und/oder des zweiten Dichtungselements 15 sein. Die erste Anschlussdichtung 30 kann in radialer Richtung über den inneren Rand 16a oder den äußeren Rand 16b (vgl. Fig. 9) hinweg herausragen.

Die zweite Anschlussdichtung 20 kann zumindest abschnittsweise radial nach innen oder außen versetzt zu dem inneren Rand 16a und/oder äußeren Rand 16b (vgl. Fig. 9) der Federplatte 16 des elastischen Elements 1a, 1b angeordnet sein. Die zweite Anschlussdichtung 20 kann Teil des ersten Dichtungselements 17 und/oder des zweiten Dichtungselements 15 sein. Die zweite Anschlussdichtung 20 kann in radialer Richtung über den inneren Rand 16a oder den äußeren Rand 16b (vgl. Fig. 9) hinweg herausragen.

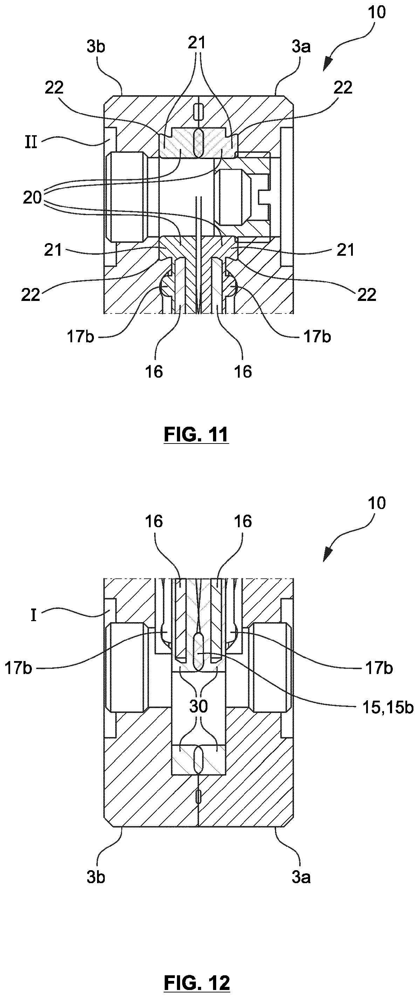

Die Figuren 11 und 12 zeigen jeweils einen Ausschnitt des Querschnitts der erfindungsgemäßen Vorrichtung 10. Die linke Hälfte und die rechte Hälfte der Figuren 11 und 12 zeigen jeweils einen Querschnitt des erfindungsgemäßen elastischen Elements 1a, 1b gemäß Figur 9 eingebaut in dem Gehäuseteil 3a, 3b gemäß Figur 10. Dabei wird das elastische Element 1a, 1b in der Aussparung 11 derart zwischen dem inneren Rand 100a (bzw. Klemmelement 8 mit Klemmfläche 7) und dem äußeren Rand 100b des Gehäuseteils 3a, 3b eingeklemmt, dass die erste Anschlussdichtung 30 in Kontakt kommt mit dem Bereich des Gehäuseteils 3a, 3b für den ersten Anschluss I und die zweite Anschlussdichtung 20 in Kontakt kommt mit dem Bereich des Gehäuseteils 3, 3b für den Anschluss II. Dies wird zweimal durchgeführt, sodass zwei erfindungsgemäße Komponenten hergerichtet werden, die dann miteinander befestigt werden, wie in den Figuren 11 und 12 gezeigt.

Der in Figur 11 gezeigte Ausschnitt des Querschnitts der Vorrichtung 10 entspricht in seiner Position den in den Figuren 9 und 10 angedeuteten Schnitten XI durch das elastische Element 1a, 1b und das Gehäuseteil 3a, 3b im Bereich der zweiten Anschlussdichtung 20. Die zweite Anschlussdichtung 20 weist einen Rand entlang einer zweite Anschlussöffnung auf, wobei der Rand dem Abdichten des zweiten Anschlusses II der Klemm- und/oder Bremsvorrichtung 10 zum Beaufschlagen des zweiten Druckraumes 2 der Klemm- und/oder Bremsvorrichtung 10 mit einem Druckmedium dient. Die zweite Anschlussdichtung 20 bildet entlang des Rands der zweiten Anschlussöffnung einen Anschlussvorsprung 21 aus, der die zweite Anschlussöffnung zumindest teilweise und vorzugsweise vollständig umläuft.

Der Anschlussvorsprung 21 der zweiten Anschlussdichtung 20 bildet zumindest abschnittsweise an dem Rand der zweiten Anschlussöffnung einen Hintergriff 22 aus, um die Abdichtung insbesondere gegenüber Austritt von Druckmedium in die Umgebung zu verstärken. Der Hintergriff 22 der zweiten Anschlussdichtung 20 vermindert das Risiko eines Abhebens der zweiten Anschlussdichtung 20 von der Gehäuseplanfläche, speziell beim Beaufschlagen des ersten Druckraums 4. Dazu kommt, dass durch den Hintergriff 22 der Einsatz von Dichtmasse (Kleber) an dieser Stelle vermieden werden kann. Eine solche Dichtmasse könnte sich negativ auf Vakuum bzw. Reinraum auswirken.

Die zweite Anschlussdichtung 20 kann einen Teil des inneren oder äußeren Vorsprungs 15a, 15b des zweiten Dichtungselements 15 ausbilden. Der Teil des Vorsprungs des zweiten Dichtungselements 15 der durch die zweite Anschlussdichtung 20 ausgebildet ist, kann auf einer Seite der zweiten Anschlussöffnung 20 angeordnet sein, die einer Seite der zweiten Anschlussöffnung 20 abgewandt und/oder gegenüberliegend ist an der der Anschlussvorsprung 21 durch die zweite Anschlussdichtung 20 ausgebildet ist.

Der in Figur 12 gezeigte Ausschnitt des Querschnitts der Vorrichtung 10 entspricht in seiner Position den in den Figuren 9 und 10 angedeuteten Schnitten XII durch das elastische Element 1a, 1b und das Gehäuseteil 3a, 3b im Bereich der ersten Anschlussdichtung 30. Die erste Anschlussdichtung 30 weist einen Rand einer ersten Anschlussöffnung auf, wobei der Rand dem Abdichten des ersten Anschlusses I der Klemm- und/oder Bremsvorrichtung 10 zum Beaufschlagen des ersten Druckraumes 4 der Klemm- und/oder Bremsvorrichtung 10 mit einem Druckmedium dient. Der Rand der ersten Anschlussdichtung 30 umläuft die erste Anschlussöffnung zumindest teilweise und vorzugsweise vollständig.

Die erste Anschlussdichtung 30 kann einen O-Ring umfassen, der die erste Anschlussöffnung umläuft. Die Ausbeulung 15d des Vorsprungs 15b mit der Schrägen 103 stellen zusammen mit der ersten Anschlussdichtung 30 am Anschluss I sicher, dass beim Beaufschlagen des ersten Druckraumes 4 keine Fluide über den Gehäuserand ein-oder abströmen. Zusätzlich können dadurch unerwünschte Dichtungsmassen (Kleber) zwischen den Gehäusehälften entfallen. Eine solche Dichtmasse könnte sich negativ auf Vakuum bzw. Reinraum auswirken.

Durch die hier beschriebenen Mitteln einzeln und in Kombination können Klemmen bereitgestellt werden, die verlässlichen in Vakuum und/oder Reinraum sowie optional in feuchter Umgebung betrieben werden können, ohne, dass dadurch die Dynamik des Öffnens und Schließens der Klemme negativ beeinträchtigt wird.

In der Beschreibung und in den Figuren sind bevorzugte Ausführungsformen der durch die beigefügten Ansprüche beanspruchten Erfindung beschrieben. Die in der vorstehenden Beschreibung, den Ansprüchen und den Zeichnungen offenbarten optionalen Merkmale können sowohl einzeln als auch in beliebiger Kombination für die Ausführung der hier gemäß der beiliegenden Ansprüche beanspruchten Erfindung in ihren verschiedenen Ausgestaltungen Verwendung finden.

## Patentansprüche

1. Ein ringförmiges elastisches Element (1a, 1b) für eine Klemm- und/oder Bremsvorrichtung (10), das Element (1a, 1b) umfassend:
eine ringförmige Federplatte (16), wobei die ringförmige Federplatte (16) eine erste ringförmige Seitenfläche (16c) und eine zweite ringförmige Seitenfläche (16d) aufweist; ein Dichtungselement (15), wobei das Dichtungselement (15) auf der zweiten Seitenfläche (16d) der Federplatte (16) angeordnet ist, und wobei das Dichtungselement (15) in einem Bereich eines inneren Randes (16a) der ringförmigen Federplatte (16) einen inneren Vorsprung (15a) ausbildet und in einem Bereich eines äußeren Randes (16b) der ringförmigen Federplatte (16) einen äußeren Vorsprung (15b) ausbildet;
**dadurch gekennzeichnet, dass**
der innere und/oder äußere Vorsprung (15a, 15b) des Dichtungselements (15) jeweils zumindest abschnittsweise eine Ausbeulung (15c, 15d) ausbildet.

2. Das elastische Element (1a, 1b) nach Anspruch 1, **dadurch gekennzeichnet, dass** die Ausbeulung (15c) des inneren Vorsprungs (15a) des Dichtungselements (15) sich radial nach innen vorzugsweise radial inwärts über den inneren Rand (16a) der Federplatte (16) hinweg erstreckt, und/oder, dass die Ausbeulung (15d) des äußeren Vorsprungs (15b) des Dichtungselements (15) sich radial nach außen vorzugsweise über den äußeren Rand (16b) der Federplatte (16) hinweg erstreckt.

3. Das elastische Element (1a, 1b) nach Anspruch 1 oder 2, **dadurch gekennzeichnet, dass** der innere und/oder äußere Vorsprung (15a, 15b) des Dichtungselements (15) jeweils eine zumindest abschnittsweise plane Oberfläche aufweist, die vorzugsweise eine Auflagefläche zum Abdichten eines Druckraums (2) ist.

4. Das elastische Element (1a, 1b) nach Anspruch 3, **dadurch gekennzeichnet, dass** die Ausbeulung (15c) des inneren Vorsprungs (15a) zur planen Oberfläche (15e) des inneren Vorsprungs (15a) benachbart oder angrenzend ist und/oder die Ausbeulung (15d) des äußeren Vorsprungs (15b) zur planen Oberfläche (15f) des äußeren Vorsprungs (15b) benachbart oder angrenzend ist.

5. Das elastische Element (1a, 1b) nach irgendeinem der vorangehenden Ansprüche, **dadurch gekennzeichnet, dass** das Dichtungselement (15) ein zweites Dichtungselement (15) ist und das elastische Element ferner ein erstes Dichtungselement (17) umfasst, wobei das erste Dichtungselement (17) auf der ersten Seitenfläche (16c) der Federplatte (16) angeordnet ist.

6. Das elastische Element (1a, 1b) nach Anspruch 5, **dadurch gekennzeichnet, dass** das erste Dichtungselement (17) einen ersten Vorsprung (17a) ausbildet.

7. Das elastische Element (1a, 1b) nach Anspruch 6, **dadurch gekennzeichnet, dass** der erste Vorsprung (17a) zwischen dem inneren und äußerem Rand der ringförmigen Federplatte (16) ausgebildet ist, vorzugsweise wobei der erste Vorsprung (17a) in einem Bereich des inneren (16a) oder äußeren (16b) Randes der ringförmigen Federplatte (16) ausgebildet ist.

8. Das elastische Element (1a, 1b) nach einem der vorhergehenden Ansprüche 5 bis 7, **dadurch gekennzeichnet, dass** das erste Dichtungselement (17) ferner, vorzugsweise zwischen dem inneren und äußerem Rand der ringförmigen Federplatte (16), besonders bevorzugt in einem Bereich des äußeren Randes (16b) der ringförmigen Federplatte (16) auf der ersten Seitenfläche (16c), einen zweiten Vorsprung (17b) ausbildet.

9. Das elastische Element (1a, 1b) nach einem der vorhergehenden Ansprüche, **dadurch gekennzeichnet, dass** jeder der Vorsprünge des ersten und/oder zweiten Dichtungselements (15, 17) zumindest abschnittsweise ringförmig ist.

10. Das elastische Element (1a, 1b) nach einem der vorhergehenden Ansprüche 6 bis 9, **dadurch gekennzeichnet, dass** der erste Vorsprung (17a) und/oder der zweite Vorsprung (17b) des ersten Dichtungselements (17) eine zumindest abschnittsweise abgerundete Oberfläche aufweist.

11. Das elastische Element (1a, 1b) nach irgendeinem der vorangehenden Ansprüche 6 bis 10, **dadurch gekennzeichnet, dass** eine Längsachse des ersten Vorsprungs (17a) des ersten Dichtungselements (17) im Wesentlichen senkrecht zu der ersten Seitenfläche (16c) der Federplatte (16) verläuft.

12. Das elastische Element (1a, 1b) nach irgendeinem der vorangehenden Ansprüche, **dadurch gekennzeichnet, dass** das elastische Element (1a, 1b) ferner umfasst: eine erste Anschlussdichtung (30), die einen Rand einer ersten Anschlussöffnung der ersten Anschlussdichtung (30) definiert, wobei der Rand geeignet ist zum Abdichten eines ersten Anschlusses (I) der Klemm- und/oder Bremsvorrichtung (10) zum Beaufschlagen eines ersten Druckraumes (4) der Klemm- und/oder Bremsvorrichtung (10) mit einem Druckmedium, vorzugsweise wobei der Rand der ersten Anschlussdichtung (30) die erste Anschlussöffnung zumindest teilweise und vorzugsweise vollständig umläuft.

13. Das elastische Element (1a, 1b) nach irgendeinem der vorangehenden Ansprüche, **dadurch gekennzeichnet, dass** das elastische Element (1a, 1b) ferner umfasst: eine zweite Anschlussdichtung (20), die einen Rand einer zweiten Anschlussöffnung der zweiten Anschlussdichtung (20) definiert, wobei der Rand geeignet ist zum Abdichten eines zweiten Anschlusses (II) der Klemm- und/oder Bremsvorrichtung (10) zum Beaufschlagen eines zweiten Druckraumes (2) der Klemm- und/oder Bremsvorrichtung (10) mit einem Druckmedium, vorzugsweise
wobei die zweite Anschlussdichtung (20) entlang des Rands der zweiten Anschlussöffnung einen Anschlussvorsprung (21) ausbildet, der die zweite Anschlussöffnung zumindest teilweise und vorzugsweise vollständig umläuft wobei
der Anschlussvorsprung (21) der zweiten Anschlussdichtung (20) zumindest abschnittsweise an dem Rand der zweiten Anschlussöffnung einen Hintergriff (22) ausbildet.

14. Ein Gehäuseteil (3a, 3b) für eine Klemm- und/oder Bremsvorrichtung (10), das Gehäuseteil (3a, 3b) umfassend:
eine ringförmige Aussparung (11) zum Einklemmen des ringförmigen elastischen Elements (1a, 1b) nach irgendeinem der vorangehenden Ansprüche,
wobei die Aussparung (11) einen ersten ringförmigen Rand (12a) und einen zweiten ringförmigen Rand (12b) einer ringförmigen Öffnung (12) des Gehäuseteils (3a, 3b) ausbildet,
wobei die ringförmige Aussparung (11) eine Innenfläche (105) des Gehäuseteils (3a, 3b) zwischen dem ersten ringförmigen Rand (12a) und dem zweiten ringförmigen Rand (12b) definiert,
wobei die Innenfläche (105) im Bereich des ersten ringförmigen Rands (12a) eine erste Schräge (103) ausbildet und die Innenfläche (105) im Bereich des zweiten ringförmigen Rands (12b) eine zweite Schräge (104) ausbildet, wobei die Schrägen (103, 104) derart ausgerichtet sind, dass sich die ringförmige Öffnung (12) zu den ersten und zweiten Rändern (12a, 12b) hin vergrößert.

15. Das Gehäuseteil nach Anspruch 14, wobei die Innenfläche (105) eine erste Anlagefläche (101) und eine zweite Anlagefläche (102) bildet, die ausgebildet sind dazwischen die Federplatte (16) des elastischen Elements nach irgendeinem der vorangehenden Ansprüche einzuklemmen, wobei die erste Schräge (103) zwischen der ersten Anlagefläche (101) und dem ersten ringförmigen Rand (12a) angeordnet ist und wobei die zweite Schräge (104) zwischen der zweiten Anlagefläche (101) und dem zweiten ringförmigen Rand (12a) angeordnet ist.

16. Das Gehäuseteil nach Anspruch 14 oder 15,
wobei, wenn das elastische Element (1a, 1b) mit der ersten Seitenfläche (16c) zugewandt zu der Innenfläche (105) in der Aussparung (11) eingeklemmt ist, der erste Vorsprung (17a) des ersten Dichtungselements (17) ausgelegt ist, einen Kontakt mit einem ersten Abschnitt der Innenfläche (105) des Gehäuseteils (3a, 3b) herzustellen, vorzugsweise wobei der erste Abschnitt der Innenfläche (105) zwischen der ersten Anlagefläche (101) und der zweiten Anlagefläche (102) liegt.

17. Eine Klemm- und/oder Bremsvorrichtung (10) zum Klemmen und/oder Bremsen eines zu klemmenden und/oder bremsenden Objekts, umfassend:
ein erstes elastisches Element (1a) nach irgendeinem der vorangehenden Ansprüche und ein zweites elastisches Element (1b) nach irgendeinem der vorangehenden Ansprüche;
ein Gehäuse (3) umfassend ein erstes Gehäuseteil (3a), vorzugsweise nach einem der vorangehenden Ansprüche, mit einer Innenfläche (105) und ein zweites Gehäuseteil (3b), vorzugsweise nach einem der vorangehenden Ansprüche, mit einer Innenfläche (105), wobei die Gehäuseteile derart zueinander angeordnet und miteinander befestigt sind, dass die Innenflächen (105) der Gehäuseteile (3a, 3b) zusammen einen Innenraum innerhalb des Gehäuses (3) abgrenzen;
ein oder mehrere Klemmelemente (8), wobei jedes Klemmelement eine Klemmfläche (7) aufweist;
eine in dem Innenraum angeordnete Feder (1) umfassend das erste elastische Element (1a, 1b) und das zweite elastische Element (1a, 1b), wobei die elastischen Elemente derart innerhalb des Innenraums angeordnet sind, dass in dem Innenraum ein erster Druckraum (4) zwischen den elastischen Elementen (1a, 1b) und den Innenflächen (105) der Gehäuseteile gebildet wird, wobei der erste Druckraum (4) entlüftbar ist und mit Überdruck eines dem Gehäuse zuführbaren Druckmediums beaufschlagbar ist,
wobei das erste elastische Element (1a, 1b) mit dessen erster Seitenfläche (16c) zugewandt zu der Innenfläche (105) des ersten Gehäuseteils (3a) in dem Innenraum eingeklemmt ist, und
wobei das zweite elastische Element (1a, 1b) mit dessen erster Seitenfläche (16c) zugewandt zu der Innenfläche (105) des zweiten Gehäuseteils (3b) in dem Innenraum eingeklemmt ist;
wobei die Feder (1) ausgelegt ist, dass bei Be- oder Entlüften des ersten Druckraums (4) oder Beaufschlagung des ersten Druckraums (4) mit Überdruck, eine Biegung mindestens einer der Federplatten (16) der elastischen Elemente (1a, 1b) veränderbar ist und dadurch die Vorrichtung (10) zwischen einem geöffneten Zustand, in dem ein zu klemmendes Objekt (5) von den ein oder mehreren Klemmflächen (7) beabstandet ist, und einem geschlossenen Zustand, in dem mindestens eine der ein oder mehreren Klemmflächen (7) eine Klemm- und/oder Bremskraft auf das Objekt (5) übertragen, wechselt; und
wobei die Ausbeulung (15c, 15d) des inneren oder äußeren Vorsprungs (15a, 15b) zumindest eines der elastischen Elemente (1a, 1b) ausgelegt ist, einen Kontakt mit einem ersten Abschnitt der Innenfläche (105) eines der Gehäuseteile (3a, 3b) herzustellen, um dadurch eine Strömungsverbindung zwischen dem ersten Druckraum (4) und dem Übergang zwischen den Gehäuseteilen (3a, 3b) zumindest zu hemmen.

18. Die Vorrichtung nach Anspruch 17, wobei der erste Vorsprung (17a) des ersten Dichtungselements (17) zumindest eines der elastischen Elemente (1a, 1b) ausgelegt ist, einen Kontakt mit einem zweiten Abschnitt der Innenfläche (105) eines der Gehäuseteile (3a, 3b) herzustellen, um dadurch eine Strömungsverbindung zwischen einem Bereich des ersten Druckraums (4) und einem Übergang zwischen den Gehäuseteilen (3a, 3b) zumindest zu hemmen,
vorzugsweise wobei der Kontakt zumindest teilweise abdichtend ist gegenüber einem Medium, vorzugsweise ein Fluid oder eine Flüssigkeit, das aus der Umgebung der Vorrichtung durch den Übergang der Gehäuseteile, vorzugsweise im Bereich der mindestens einen Klemmfläche (7), in das Gehäuse oder den ersten Druckraum (4) eingetreten ist.

19. Die Vorrichtung (10) nach Anspruch 18, **dadurch gekennzeichnet, dass** der Bereich des ersten Druckraumes (4) zwischen dem ersten Vorsprung (17a) des ersten Dichtungselements (17) des zumindest einen elastischen Elements und dem inneren oder äußeren Rand der Federplatte (16) des zumindest einen elastischen Elements, oder des zweiten Vorsprungs (17b) des ersten Dichtungselements (17) des zumindest einen elastischen Elements, angeordnet ist.

20. Die Vorrichtung (10) nach einem der Ansprüche 17 bis 19, **dadurch gekennzeichnet, dass** das erste Gehäuseteil von dem Hintergriff (22) des Anschlussvorsprungs (21) des ersten elastischen Elements hintergriffen wird und/oder das zweite Gehäuseteil von dem Hintergriff (22) des Anschlussvorsprungs (21) des zweiten elastischen Elements hintergriffen wird.

21. Die Klemm- und/oder Bremsvorrichtung (10) nach irgendeinem der vorangehenden Ansprüche, wobei die Federplatte (16) des zumindest einen elastischen Elements (1a, 1b) zwischen einer ersten Anlagefläche (101) des ersten Gehäuseteils und einer zweiten Anlagefläche (102) des ersten Gehäuseteils eingeklemmt ist und wobei der erste Abschnitt der Innenfläche (105) zwischen der ersten und/oder zweiten Anlagefläche (101, 102) des ersten Gehäuseteils und dem Übergang der Gehäuseteile (3a, 3b) liegt.

22. Klemm- und/oder Bremsvorrichtung (10) nach irgendeinem der vorangehenden Ansprüche 17 bis 21, **dadurch gekennzeichnet, dass** der erste Abschnitt der Innenfläche (105) eine erste und zweite Schräge (103, 104) ausbildet, wobei die Ausbeulung (15c, 15d) des inneren Vorsprung (15a) des zumindest einen elastischen Elements (1a, 1b) die zweite Schräge der zweiten Anlagefläche (102) des ersten Gehäuseteils berührt, und wobei die Ausbeulung (15c, 15d) des äußeren Vorsprungs (15b) des zumindest einen elastischen Elements (1a, 1b) die erste Schräge der ersten Anlagefläche (101) des ersten Gehäuseteils berührt.

23. Klemm- und/oder Bremsvorrichtung (10) nach irgendeinem der vorangehenden Ansprüche, **dadurch gekennzeichnet, dass** das erste elastische Element (1a, 1b) und das zweite elastische Element (1a, 1b) derart in dem Innenraum eingeklemmt sind, dass sich die planen Oberflächen (15e, 15f) der inneren Vorsprünge (15a) der elastischen Elemente gegenseitig berühren und/oder die planen Oberflächen (15e, 15f) der äußeren Vorsprünge (15b) der elastischen Elemente gegenseitig berühren, vorzugsweise um so den zweiten Druckraum (2) zu begrenzen.

24. Die Klemm- und/oder Bremsvorrichtung (10) nach irgendeinem der vorangehenden Ansprüche, **dadurch gekennzeichnet, dass** der zweite Vorsprung (17b) des ersten Dichtungselements (17) zumindest eines der elastischen Elemente ausgelegt ist, einen Kontakt mit einem zweiten Abschnitt der Innenfläche (105) des Gehäuseteils herzustellen, vorzugsweise wobei der zweite Abschnitt der Innenfläche (105) zwischen der ersten Anlagefläche (101) und der zweiten Anlagefläche (102) liegt.

25. Die Klemm- und/oder Bremsvorrichtung (10) nach irgendeinem der vorangehenden Ansprüche, **dadurch gekennzeichnet, dass** der erste und/oder zweite Abschnitt jeweils eine Einbuchtung oder Senke (106, 107) in der Innenfläche (105) ist, vorzugsweise wobei die Einbuchtung oder Senke (106, 107) in ihrer Form komplementär zur Oberfläche des sie kontaktierenden Vorsprungs ist.

26. Die Klemm- und/oder Bremsvorrichtung (10) nach irgendeinem der vorangehenden Ansprüche, **dadurch gekennzeichnet, dass** jedes der Gehäuseteile eine, vorzugsweise kreisförmige, Rille oder Nut (110) aufweist, wobei zwei sich berührende O-Ringe in den Rillen oder Nuten (110) zwischen den Gehäuseteilen aufgenommen sind, vorzugsweise wobei die Rille oder Nut (110) jedes Gehäuseteils entlang des Umfangs des Gehäuseteils zwischen einem äußeren Rand (100b) des Gehäuseteils und der Aussparung (11) oder der ersten Anlagefläche (101) vorzugsweise vollständig umläuft.

## Claims

1. An annular elastic member (1a, 1b) for a clamping and/or braking device (10), the member (1a, 1b) comprising:
an annular spring plate (16), the annular spring plate (16) having a first annular side surface (16c) and a second annular side surface (16d);
a sealing element (15), the sealing element (15) being arranged on the second side surface (16d) of the spring plate (16), and the sealing element (15) forming an inner projection (15a) in a region of an inner edge (16a) of the annular spring plate (16) and forming an outer projection (15b) in a region of an outer edge (16b) of the annular spring plate (16);
**characterized in that**
the inner and/or outer projection (15a, 15b) of the sealing element (15) each form a bulge (15c, 15d) at least in sections.

2. The elastic member (1a, 1b) according to claim 1, **characterized in that** the bulge (15c) of the inner projection (15a) of the sealing element (15) extends radially inward, preferably radially inward, beyond the inner edge (16a) of the spring plate (16), and/or in that the bulge (15d) of the outer projection (15b) of the sealing element (15) extends radially outward, preferably beyond the outer edge (16b) of the spring plate (16).

3. The elastic member (1a, 1b) according to claim 1 or 2, **characterized in that** the inner and/or outer projection (15a, 15b) of the sealing element (15) each have a planar surface, at least in sections, which is preferably a bearing surface for sealing a pressure space (2).

4. The elastic member (1a, 1b) according to claim 3, **characterized in that** the bulge (15c) of the inner projection (15a) is adjacent or adjacent to the planar surface (15e) of the inner projection (15a) and/or the bulge (15d) of the outer projection (15b) is adjacent or adjacent to the planar surface (15f) of the outer projection (15b).

5. The elastic member (1a, 1b) according to any one of the preceding claims, **characterized in that** the sealing element (15) is a second sealing element (15) and the elastic member further comprises a first sealing element (17), the first sealing element (17) being arranged on the first side surface (16c) of the spring plate (16).

6. The elastic member (1a, 1b) according to claim 5, **characterized in that** the first sealing element (17) forms a first projection (17a).

7. The elastic member (1a, 1b) according to claim 6, **characterized in that** the first projection (17a) is formed between the inner and outer edge of the annular spring plate (16), preferably wherein the first projection (17a) is formed in a region of the inner (16a) or outer (16b) edge of the annular spring plate (16).

8. The elastic member (1a, 1b) according to any one of the preceding claims 5 to 7, **characterized in that** the first sealing element (17) further forms a second projection (17b), preferably between the inner and outer edge of the annular spring plate (16), particularly preferably in a region of the outer edge (16b) of the annular spring plate (16) on the first side surface (16c).

9. The elastic member (1a, 1b) according to any one of the preceding claims, **characterized in that** each of the projections of the first and/or second sealing element (15, 17) is annular at least in sections.

10. The elastic member (1a, 1b) according to any one of the preceding claims 6 to 9, **characterized in that** the first projection (17a) and/or the second projection (17b) of the first sealing element (17) has a rounded surface at least in sections.

11. The elastic member (1a, 1b) according to any one of the preceding claims 6 to 10, **characterized in that** a longitudinal axis of the first projection (17a) of the first sealing element (17) is substantially perpendicular to the first side surface (16c) of the spring plate (16).

12. The elastic member (1a, 1b) according to any one of the preceding claims, **characterized in that** the elastic member (1a, 1b) further comprises: a first port seal (30) defining an edge of a first port opening of the first port seal (30), the edge being suitable for sealing a first port (I) of the clamping and/or braking device (10) for applying a pressure medium to a first pressure space (4) of the clamping and/or braking device (10), preferably wherein the edge of the first port seal (30) at least partially and preferably completely surrounds the first port opening.

13. The elastic member (1a, 1b) according to any one of the preceding claims, **characterized in that** the elastic member (1a, 1b) further comprises: a second port seal (20) defining an edge of a second port opening of the second port seal (20), the edge being suitable for sealing a second port (II) of the clamping and/or braking device (10) for applying a pressure medium to a second pressure space (2) of the clamping and/or braking device (10), preferably
wherein the second port seal (20) forms a port projection (21) along the edge of the second port opening, the port projection at least partially and preferably completely surrounding the second port opening, wherein
the port projection (21) of the second port seal (20) forms a rear grip (22) at least in sections at the edge of the second port opening.

14. A housing part (3a, 3b) for a clamping and/or braking device (10), the housing part (3a, 3b) comprising:
an annular recess (11) for clamping the annular elastic member (1a, 1b) according to any one of the preceding claims,
wherein the recess (11) forms a first annular edge (12a) and a second annular edge (12b) of an annular opening (12) of the housing part (3a, 3b),
wherein the annular recess (11) defines an inner surface (105) of the housing part (3a, 3b) between the first annular edge (12a) and the second annular edge (12b),
wherein the inner surface (105) forms a first bevel (103) in the region of the first annular edge (12a) and the inner surface (105) forms a second bevel (104) in the region of the second annular edge (12b), wherein the bevels (103, 104) are aligned such that the annular opening (12) increases towards the first and second edges (12a, 12b).

15. The housing part according to claim 14, wherein the inner surface (105) forms a first contact surface (101) and a second contact surface (102) which are formed to clamp the spring plate (16) of the elastic member according to any one of the preceding claims therebetween, wherein the first bevel (103) is arranged between the first contact surface (101) and the first annular edge (12a) and wherein the second bevel (104) is arranged between the second contact surface (102) and the second annular edge (12b).

16. The housing part according to claim 14 or 15,
wherein, when the elastic member (1a, 1b) is clamped with the first side surface (16c) facing the inner surface (105) in the recess (11), the first projection (17a) of the first sealing element (17) is configured to make contact with a first section of the inner surface (105) of the housing part (3a, 3b), preferably wherein the first section of the inner surface (105) lies between the first contact surface (101) and the second contact surface (102).

17. A clamping and/or braking device (10) for clamping and/or braking an object to be clamped and/or braked, comprising:
a first elastic member (1a) according to any one of the preceding claims and a second elastic member (1b) according to any one of the preceding claims;
a housing (3) comprising a first housing part (3a), preferably according to any one of the preceding claims, with an inner surface (105) and a second housing part (3b), preferably according to any one of the preceding claims, with an inner surface (105), wherein the housing parts are arranged with respect to each other and fixed to each other such that the inner surfaces (105) of the housing parts (3a, 3b) together delimit an interior space within the housing (3);
one or more clamping elements (8), each clamping element having a clamping surface (7);
a spring (1) arranged in the interior space comprising the first elastic member (1a, 1b) and the second elastic member (1a, 1b), wherein the elastic members are arranged within the interior space such that a first pressure space (4) is formed in the interior space between the elastic members (1a, 1b) and the inner surfaces (105) of the housing parts, wherein the first pressure space (4) can be deaerated and can be subjected to overpressure of a pressure medium that can be supplied to the housing,
wherein the first elastic member (1a, 1b) is clamped with the first side surface (16c) thereof facing the inner surface (105) of the first housing part (3a) in the interior space, and
wherein the second elastic member (1a, 1b) is clamped with the first side surface (16c) thereof facing the inner surface (105) of the second housing part (3b) in the interior space;
wherein the spring (1) is designed such that when the first pressure space (4) is aerated or deaerated or the first pressure space (4) is subjected to overpressure, a bending of at least one of the spring plates (16) of the elastic members (1a, 1b) can be changed and thereby the device (10) changes between an open state, in which an object (5) to be clamped is spaced apart from the one or more clamping surfaces (7), and a closed state, in which at least one of the one or more clamping surfaces (7) transmits a clamping and/or braking force to the object (5); and
wherein the bulge (15c, 15d) of the inner or outer projection (15a, 15b) of at least one of the elastic members (1a, 1b) is configured to make contact with a first section of the inner surface (105) of one of the housing parts (3a, 3b) in order thereby to at least inhibit a flow connection between the first pressure space (4) and the transition between the housing parts (3a, 3b).

18. The device according to claim 17, wherein the first projection (17a) of the first sealing element (17) of at least one of the elastic members (1a, 1b) is configured to make contact with a second section of the inner surface (105) of one of the housing parts (3a, 3b) in order thereby to at least inhibit a flow connection between a region of the first pressure space (4) and a transition between the housing parts (3a, 3b),
preferably wherein the contact is at least partially sealing with respect to a medium, preferably a fluid or a liquid, which has entered the housing or the first pressure space (4) from the surroundings of the device through the transition of the housing parts, preferably in the region of the at least one clamping surface (7).

19. The device (10) according to claim 18, **characterized in that** the region of the first pressure space (4) is arranged between the first projection (17a) of the first sealing element (17) of the at least one elastic member and the inner or outer edge of the spring plate (16) of the at least one elastic member, or the second projection (17b) of the first sealing element (17) of the at least one elastic member.

20. The device (10) according to any one of claims 17 to 19, **characterized in that** the first housing part is gripped from behind by the rear grip (22) of the port projection (21) of the first elastic member and/or the second housing part is gripped from behind by the rear grip (22) of the port projection (21) of the second elastic member.

21. The clamping and/or braking device (10) according to any one of the preceding claims, wherein the spring plate (16) of the at least one elastic member (1a, 1b) is clamped between a first contact surface (101) of the first housing part and a second contact surface (102) of the first housing part and wherein the first section of the inner surface (105) lies between the first and/or second contact surface (101, 102) of the first housing part and the transition of the housing parts (3a, 3b).

22. The clamping and/or braking device (10) according to any one of the preceding claims 17 to 21, **characterized in that** the first section of the inner surface (105) forms a first and second bevel (103, 104), wherein the bulge (15c, 15d) of the inner projection (15a) of the at least one elastic member (1a, 1b) contacts the second bevel of the second contact surface (102) of the first housing part, and wherein the bulge (15c, 15d) of the outer projection (15b) of the at least one elastic member (1a, 1b) contacts the first bevel of the first contact surface (101) of the first housing part.

23. The clamping and/or braking device (10) according to any one of the preceding claims, **characterized in that** the first elastic member (1a, 1b) and the second elastic member (1a, 1b) are clamped in the interior space such that the planar surfaces (15e, 15f) of the inner projections (15a) of the elastic members contact each other and/or the planar surfaces (15e, 15f) of the outer projections (15b) of the elastic members contact each other, preferably so as to delimit the second pressure space (2).

24. The clamping and/or braking device (10) according to any one of the preceding claims, **characterized in that** the second projection (17b) of the first sealing element (17) of at least one of the elastic members is configured to make contact with a second section of the inner surface (105) of the housing part, preferably wherein the second section of the inner surface (105) lies between the first contact surface (101) and the second contact surface (102).

25. The clamping and/or braking device (10) according to any one of the preceding claims, **characterized in that** the first and/or second section is each an indentation or depression (106, 107) in the inner surface (105), preferably wherein the indentation or depression (106, 107) is complementary in shape to the surface of the projection contacting it.

26. The clamping and/or braking device (10) according to any one of the preceding claims, **characterized in that** each of the housing parts has a, preferably circular, rill or groove (110), wherein two contacting O-rings are received in the rills or grooves (110) between the housing parts, preferably wherein the rill or groove (110) of each housing part preferably completely surrounds along the circumference of the housing part between an outer edge (100b) of the housing part and the recess (11) or the first contact surface (101).

## Revendications

1. Elément élastique annulaire (1a, 1b) pour un dispositif de serrage et/ou de freinage (10), l'élément (1a, 1b) comprenant :
une plaque de ressort annulaire (16), la plaque de ressort annulaire (16) ayant une première surface latérale annulaire (16c) et une seconde surface latérale annulaire (16d) ;
un élément d'étanchéité (15), l'élément d'étanchéité (15) étant disposé sur la seconde surface latérale (16d) de la plaque de ressort (16), et l'élément d'étanchéité (15) formant une saillie intérieure (15a) dans une région d'un bord intérieur (16a) de la plaque de ressort annulaire (16) et formant une saillie extérieure (15b) dans une région d'un bord extérieur (16b) de la plaque de ressort annulaire (16) ;
**caractérisé en ce que**
la saillie intérieure et/ou extérieure (15a, 15b) de l'élément d'étanchéité (15) forme respectivement au moins en partie un renflement (15c, 15d).

2. Elément élastique (1a, 1b) selon la revendication 1, **caractérisé en ce que** le renflement (15c) de la saillie intérieure (15a) de l'élément d'étanchéité (15) s'étend radialement vers l'intérieur, de préférence radialement vers l'intérieur, au-delà du bord intérieur (16a) de la plaque de ressort (16), et/ou **en ce que** le renflement (15d) de la saillie extérieure (15b) de l'élément d'étanchéité (15) s'étend radialement vers l'extérieur, de préférence au-delà du bord extérieur (16b) de la plaque de ressort (16).

3. Elément élastique (1a, 1b) selon la revendication 1 ou 2, **caractérisé en ce que** la saillie intérieure et/ou extérieure (15a, 15b) de l'élément d'étanchéité (15) a respectivement une surface plane au moins en partie, qui est de préférence une surface d'appui pour rendre étanche un espace de pression (2).

4. Elément élastique (1a, 1b) selon la revendication 3, **caractérisé en ce que** le renflement (15c) de la saillie intérieure (15a) est adjacent ou adjacent à la surface plane (15e) de la saillie intérieure (15a) et/ou le renflement (15d) de la saillie extérieure (15b) est adjacent ou adjacent à la surface plane (15f) de la saillie extérieure (15b).

5. Elément élastique (1a, 1b) selon l'une quelconque des revendications précédentes, **caractérisé en ce que** l'élément d'étanchéité (15) est un second élément d'étanchéité (15) et l'élément élastique comprend en outre un premier élément d'étanchéité (17), le premier élément d'étanchéité (17) étant disposé sur la première surface latérale (16c) de la plaque de ressort (16).

6. Elément élastique (1a, 1b) selon la revendication 5, **caractérisé en ce que** le premier élément d'étanchéité (17) forme une première saillie (17a).

7. Elément élastique (1a, 1b) selon la revendication 6, **caractérisé en ce que** la première saillie (17a) est formée entre les bords intérieur et extérieur de la plaque de ressort annulaire (16), de préférence la première saillie (17a) étant formée dans une région du bord intérieur (16a) ou extérieur (16b) de la plaque de ressort annulaire (16).

8. Elément élastique (1a, 1b) selon l'une quelconque des revendications précédentes 5 à 7, **caractérisé en ce que** le premier élément d'étanchéité (17) forme en outre une seconde saillie (17b), de préférence entre les bords intérieur et extérieur de la plaque de ressort annulaire (16), de manière particulièrement préférée dans une région du bord extérieur (16b) de la plaque de ressort annulaire (16) sur la première surface latérale (16c).

9. Elément élastique (1a, 1b) selon l'une quelconque des revendications précédentes, **caractérisé en ce que** chacune des saillies du premier et/ou du second élément d'étanchéité (15, 17) est au moins en partie annulaire.

10. Elément élastique (1a, 1b) selon l'une quelconque des revendications précédentes 6 à 9, **caractérisé en ce que** la première saillie (17a) et/ou la seconde saillie (17b) du premier élément d'étanchéité (17) a une surface au moins en partie arrondie.

11. Elément élastique (1a, 1b) selon l'une quelconque des revendications précédentes 6 à 10, **caractérisé en ce qu'**un axe longitudinal de la première saillie (17a) du premier élément d'étanchéité (17) est sensiblement perpendiculaire à la première surface latérale (16c) de la plaque de ressort (16).

12. Elément élastique (1a, 1b) selon l'une quelconque des revendications précédentes, **caractérisé en ce que** l'élément élastique (1a, 1b) comprend en outre : un premier joint d'étanchéité de raccordement (30) qui définit un bord d'une première ouverture de raccordement du premier joint d'étanchéité de raccordement (30), le bord étant approprié pour rendre étanche un premier raccordement (I) du dispositif de serrage et/ou de freinage (10) pour solliciter un premier espace de pression (4) du dispositif de serrage et/ou de freinage (10) avec un fluide sous pression, de préférence le bord du premier joint d'étanchéité de raccordement (30) entourant au moins en partie et de préférence complètement la première ouverture de raccordement.

13. Elément élastique (1a, 1b) selon l'une quelconque des revendications précédentes, **caractérisé en ce que** l'élément élastique (1a, 1b) comprend en outre : un second joint d'étanchéité de raccordement (20) qui définit un bord d'une seconde ouverture de raccordement du second joint d'étanchéité de raccordement (20), le bord étant approprié pour rendre étanche un second raccordement (II) du dispositif de serrage et/ou de freinage (10) pour solliciter un second espace de pression (2) du dispositif de serrage et/ou de freinage (10) avec un fluide sous pression, de préférence
le second joint d'étanchéité de raccordement (20) formant le long du bord de la seconde ouverture de raccordement une saillie de raccordement (21) qui entoure au moins en partie et de préférence complètement la seconde ouverture de raccordement,
la saillie de raccordement (21) du second joint d'étanchéité de raccordement (20) formant au moins en partie au niveau du bord de la seconde ouverture de raccordement une prise arrière (22).

14. Élément de boîtier (3a, 3b) pour un dispositif de serrage et/ou de freinage (10), l'élément de boîtier (3a, 3b) comprenant :
un évidement annulaire (11) pour serrer l'élément élastique annulaire (1a, 1b) selon l'une quelconque des revendications précédentes,
l'évidement (11) formant un premier bord annulaire (12a) et un second bord annulaire (12b) d'une ouverture annulaire (12) de l'élément de boîtier (3a, 3b),
l'évidement annulaire (11) définissant une surface intérieure (105) de l'élément de boîtier (3a, 3b) entre le premier bord annulaire (12a) et le second bord annulaire (12b), la surface intérieure (105) formant dans la région du premier bord annulaire (12a) un premier biseau (103) et la surface intérieure (105) formant dans la région du second bord annulaire (12b) un second biseau (104), les biseaux (103, 104) étant orientés de telle sorte que l'ouverture annulaire (12) augmente vers les premier et second bords (12a, 12b).

15. Élément de boîtier selon la revendication 14, dans lequel la surface intérieure (105) forme une première surface d'appui (101) et une seconde surface d'appui (102) qui sont formées pour serrer entre elles la plaque de ressort (16) de l'élément élastique selon l'une quelconque des revendications précédentes, le premier biseau (103) étant disposé entre la première surface d'appui (101) et le premier bord annulaire (12a) et le second biseau (104) étant disposé entre la seconde surface d'appui (101) et le second bord annulaire (12a).

16. Élément de boîtier selon la revendication 14 ou 15,
dans lequel, lorsque l'élément élastique (1a, 1b) est serré avec la première surface latérale (16c) tournée vers la surface intérieure (105) dans l'évidement (11), la première saillie (17a) du premier élément d'étanchéité (17) est conçue pour établir un contact avec une première partie de la surface intérieure (105) de l'élément de boîtier (3a, 3b), de préférence la première partie de la surface intérieure (105) étant située entre la première surface d'appui (101) et la seconde surface d'appui (102).

17. Dispositif de serrage et/ou de freinage (10) pour serrer et/ou freiner un objet à serrer et/ou freiner, comprenant :
un premier élément élastique (1a) selon l'une quelconque des revendications précédentes et un second élément élastique (1b) selon l'une quelconque des revendications précédentes ;
un boîtier (3) comprenant un premier élément de boîtier (3a), de préférence selon l'une quelconque des revendications précédentes, avec une surface intérieure (105) et un second élément de boîtier (3b), de préférence selon l'une quelconque des revendications précédentes, avec une surface intérieure (105), les éléments de boîtier étant disposés les uns par rapport aux autres et fixés les uns aux autres de telle sorte que les surfaces intérieures (105) des éléments de boîtier (3a, 3b) délimitent ensemble un espace intérieur à l'intérieur du boîtier (3) ;
un ou plusieurs éléments de serrage (8), chaque élément de serrage ayant une surface de serrage (7) ;
un ressort (1) disposé dans l'espace intérieur comprenant le premier élément élastique (1a, 1b) et le second élément élastique (1a, 1b), les éléments élastiques étant disposés à l'intérieur de l'espace intérieur de telle sorte qu'un premier espace de pression (4) est formé dans l'espace intérieur entre les éléments élastiques (1a, 1b) et les surfaces intérieures (105) des éléments de boîtier, le premier espace de pression (4) pouvant être purgé et pouvant être soumis à une surpression d'un fluide sous pression pouvant être fourni au boîtier,
dans lequel le premier élément élastique (1a, 1b) est serré avec sa première surface latérale (16c) tournée vers la surface intérieure (105) du premier élément de boîtier (3a) dans l'espace intérieur, et
dans lequel le second élément élastique (1a, 1b) est serré avec sa première surface latérale (16c) tournée vers la surface intérieure (105) du second élément de boîtier (3b) dans l'espace intérieur ;
dans lequel le ressort (1) est conçu de telle sorte que, lors de l'aération ou de la purge de la première chambre de pression (4) ou de la mise en surpression de la première chambre de pression (4), une flexion d'au moins l'une des plaques de ressort (16) des éléments élastiques (1a, 1b) peut être modifiée et ainsi le dispositif (10) change entre un état ouvert, dans lequel un objet à serrer (5) est espacé des une ou plusieurs surfaces de serrage (7), et un état fermé, dans lequel au moins l'une des une ou plusieurs surfaces de serrage (7) transmet une force de serrage et/ou de freinage à l'objet (5) ; et
dans lequel le renflement (15c, 15d) de la saillie intérieure ou extérieure (15a, 15b) d'au moins l'un des éléments élastiques (1a, 1b) est conçu pour établir un contact avec une première partie de la surface intérieure (105) de l'un des éléments de boîtier (3a, 3b) afin d'empêcher ainsi au moins une liaison fluidique entre le premier espace de pression (4) et la transition entre les éléments de boîtier (3a, 3b).

18. Dispositif selon la revendication 17, dans lequel la première saillie (17a) du premier élément d'étanchéité (17) d'au moins l'un des éléments élastiques (1a, 1b) est conçue pour établir un contact avec une seconde partie de la surface intérieure (105) de l'un des éléments de boîtier (3a, 3b) afin d'empêcher ainsi au moins une liaison fluidique entre une région du premier espace de pression (4) et une transition entre les éléments de boîtier (3a, 3b),
de préférence dans lequel le contact est au moins en partie étanche par rapport à un milieu, de préférence un fluide ou un liquide, qui est entré depuis l'environnement du dispositif à travers la transition des éléments de boîtier, de préférence dans la région de l'au moins une surface de serrage (7), dans le boîtier ou le premier espace de pression (4).

19. Dispositif (10) selon la revendication 18, **caractérisé en ce que** la région du premier espace de pression (4) est disposée entre la première saillie (17a) du premier élément d'étanchéité (17) de l'au moins un élément élastique et le bord intérieur ou extérieur de la plaque de ressort (16) de l'au moins un élément élastique, ou de la seconde saillie (17b) du premier élément d'étanchéité (17) de l'au moins un élément élastique.

20. Dispositif (10) selon l'une quelconque des revendications 17 à 19, **caractérisé en ce que** le premier élément de boîtier est saisi par l'arrière par la prise arrière (22) de la saillie de raccordement (21) du premier élément élastique et/ou le second élément de boîtier est saisi par l'arrière par la prise arrière (22) de la saillie de raccordement (21) du second élément élastique.

21. Dispositif de serrage et/ou de freinage (10) selon l'une quelconque des revendications précédentes, dans lequel la plaque de ressort (16) de l'au moins un élément élastique (1a, 1b) est serrée entre une première surface d'appui (101) du premier élément de boîtier et une seconde surface d'appui (102) du premier élément de boîtier et dans lequel la première partie de la surface intérieure (105) est située entre la première et/ou la seconde surface d'appui (101, 102) du premier élément de boîtier et la transition des éléments de boîtier (3a, 3b).

22. Dispositif de serrage et/ou de freinage (10) selon l'une quelconque des revendications précédentes 17 à 21, **caractérisé en ce que** la première partie de la surface intérieure (105) forme un premier et un second biseau (103, 104), dans lequel le renflement (15c, 15d) de la saillie intérieure (15a) de l'au moins un élément élastique (1a, 1b) est en contact avec le second biseau de la seconde surface d'appui (102) du premier élément de boîtier et dans lequel le renflement (15c, 15d) de la saillie extérieure (15b) de l'au moins un élément élastique (1a, 1b) est en contact avec le premier biseau de la première surface d'appui (101) du premier élément de boîtier.

23. Dispositif de serrage et/ou de freinage (10) selon l'une quelconque des revendications précédentes, **caractérisé en ce que** le premier élément élastique (1a, 1b) et le second élément élastique (1a, 1b) sont serrés dans l'espace intérieur de sorte que les surfaces planes (15e, 15f) des saillies intérieures (15a) des éléments élastiques sont en contact l'une avec l'autre et/ou les surfaces planes (15e, 15f) des saillies extérieures (15b) des éléments élastiques sont en contact l'une avec l'autre, de préférence de manière à limiter le second espace de pression (2).

24. Dispositif de serrage et/ou de freinage (10) selon l'une quelconque des revendications précédentes, **caractérisé en ce que** la seconde saillie (17b) du premier élément d'étanchéité (17) d'au moins l'un des éléments élastiques est conçue pour établir un contact avec une seconde partie de la surface intérieure (105) de l'élément de boîtier, de préférence la seconde partie de la surface intérieure (105) étant située entre la première surface d'appui (101) et la seconde surface d'appui (102).

25. Dispositif de serrage et/ou de freinage (10) selon l'une quelconque des revendications précédentes, **caractérisé en ce que** la première et/ou la seconde partie est respectivement un renfoncement ou un creux (106, 107) dans la surface intérieure (105), de préférence le renfoncement ou le creux (106, 107) étant de forme complémentaire à la surface de la saillie en contact avec celui-ci.

26. Dispositif de serrage et/ou de freinage (10) selon l'une quelconque des revendications précédentes, **caractérisé en ce que** chacun des éléments de boîtier a une rainure ou une encoche (110), de préférence circulaire, deux joints toriques en contact étant reçus dans les rainures ou les encoches (110) entre les éléments de boîtier, de préférence la rainure ou la encoche (110) de chaque élément de boîtier entourant de préférence complètement le long de la circonférence de l'élément de boîtier entre un bord extérieur (100b) de l'élément de boîtier et l'évidement (11) ou la première surface d'appui (101).
